# EUROPEAN PATENT APPLICATION

(11) **EP 1 803 697 A1**
(43) Date of publication of application: **04.07.2007**
(21) Application number: 04822333.3
(22) Date of filing: 24.11.2004
(51) Int. Cl.: C04B 38/00, A01G 9/02, E04F 13/14, B32B 9/00, C04B 37/00

(54) **COMPOSITE CERAMIC STRUCTURE, METHOD FOR PRODUCING SAME AND WALL STRUCTURE USING SUCH COMPOSITE CERAMIC STRUCTURE**

(30) Priority: 19.10.2004 JP 2004303678
(71) Applicant: Omi-Ceramic Co. Ltd., Koga-gun Shiga 5291804 (JP)
(72) Inventor: OKUDA, Nobuyasu, 5291804 (JP); SATOMI, Tokusaburo, 5291804 (JP)
(74) Representative: TBK-Patent
(86) International application number: PCT/JP2004/017422
(87) International publication number: WO 2006/043340

(57) **Abstract**

A wall surface structure wherein a plurality of tiles are arranged on each base wall surface in the row state, so as to be engaged attachable and removable to and from the base wall surface and a pot-shaped tile is engaged with a portion where the tiles are not engaged. These tiles are composite tiles composed of a composite ceramic structure made by sintering pottery and a porous ceramic body.

## Description

### TECHNICAL FIELD OF THE INVENTION

The present invention relates to a composite ceramic structure, the production method thereof, and a product, such as a tile using the composite ceramic structure. More particularly, it relates to a wall surface structure using the tile. Further, it relates to a dry tile structure where a tile is attached to the wall surface through locking parts and more particularly, a wall surface structure having beautiful appearance using a dry tile structure.

### BACKGROUND OF THE INVENTION

Several examples of porous ceramics and the production method thereof are known. However, a composite ceramic structure bonded by sintering porous ceramics and ordinary pottery, and its production method or a product consisted of the composite ceramic structure are not known.

On the other hand, the use of porous ceramics in flowerpots has been tried and the use of pot walls as porous ceramics in cultivation of orchid has been disclosed (For example, see Patent Document 1). Further, the structure of filling porous ceramic granules in the upper part of a pot divided into top and bottom with a plate and pooling water in the lower part to pierce the upper and lower parts with a porous ceramic rod (For example, see Patent Document 2).

The former is not suitable for cultivating ordinary plants because it is used for cultivating orchid required for special and a great deal of care which could be good ventilation too much for ordinary plant cultivation. The latter fills porous ceramic granules in a pot and has relatively no special problems when used on a small scale. There is, however, a possibility of the plant not being rooted due to a lot of work required in filling porous ceramic granules when used on a large scale, such as raising of plants by laying a large number of pots on the roof of a building. Furthermore, time and effort is needed for maintenance when these porous ceramic granules spill out due to toppling of the pot. If the pot is filled with porous ceramic granules before hand to transport to the construction site, these porous ceramic granules might spill out due to the tilting or toppling of the pot. In addition, the structure of a flowerpot of pooling water on the bottom of the pot, which is not limited to examples of the latter has such problems that causes mosquito larva and legionella bacteria or generation of moss around water when especially applying an embodiment of using outside.

A dry tile structure covered with the wall surface through locking parts is disclosed (For example, see Patent document 3). The structure has been coming into widespread use to rationalize its construction.

In addition to the rationalization of construction, tiles used for a dry tile structure are required to further heighten the added value because their complicated shape causes a cost increase when compared with conventional tiles.

On the other hand, technology related to energy savings caused by a reduction in air-conditioning load of a building is needed.
Patent document 1: JP Patent Publication No. 2000-270680 (Page 1, Figures 1 and 2)
Patent document 2: JP Utility Publication No. H03-10743 (Claims and Figure 1)
Patent document 3: JP Patent Publication No. 2002-191454 (Claims)

### DISCLOSURE OF THE INVENTION

### PROBLEMS TO BE SOLVED BY THE INVENTION

In view of these problems, it is an object of the present invention to provide a composite ceramic structure composed of a joint of a porous ceramic and ordinary pottery by sintering and the production method thereof. It is further object of the present invention to provide a novel tile which comprises the composite ceramic structure and a product, such as a composite flowerpot or the like.

It is yet another object of the present invention to provide a wall surface structure to realize energy savings by reducing air-conditioning load of a building as well as to provide a wall surface structure having beautiful ornamental appearance using plants by heightening the added value of the dry tile structure.

### MEANS FOR SOLVING THE PROBLEMS

A composite ceramic structure according to the present invention is composed by bonding pottery and a porous ceramic body by sintering.

The composite ceramic structure according to the present invention is composed by bonding pottery and a porous concrete structure by the curing of a precursor of the porous concrete structure.

A method for producing a composite ceramic structure according to the present invention comprises the steps of: preparing a clayware body or a molding body for firing pottery; preparing a body for firing containing a foaming agent and an evanescent granule or an evanescent porous body; splicing the clayware body or the molding body for firing pottery and the body for firing; and firing the clayware body or the molding body for firing pottery together with the spliced body for firing.

Further, the method for producing a composite ceramic structure according to the present invention comprises the steps of: preparing precursor slurry of pottery and porous concrete; splicing the pottery and the precursor slurry; and curing the spliced precursor slurry.

A composite flowerpot according to the present invention comprises: a porous body selected from a massive porous ceramic body, a massive porous concrete structure or a massive porous resin; and a container composed of pot-shaped pottery where the porous body is filled.

The composite flowerpot according to the present invention comprises: a porous body selected from a massive porous ceramic body, a massive porous concrete structure or a massive porous resin; and a coating film coated on the surface of the porous body.

A composite plate-like tile according to the present invention comprises a composite ceramic structure, wherein the pottery and the porous ceramic body are plate-shaped and the porous ceramic body is placed on the face side and is overlapped with the pottery.

The composite plate-like tile according to the present invention comprises a composite ceramic structure, wherein the pottery and the porous concrete structure are plate-shaped, the porous concrete structure is placed on the face side and is overlapped with the pottery.

The composite plate-like tile may have a groove for housing extending to the pottery in a longitudinal direction formed on a side equivalent to the tile surface, wherein the groove for housing may be filled with the porous ceramic body or the porous concrete structure.

The composite plate-like tile may include a catching part attachable and removable to and from the worked surface.

In the composite plate-like tile, a side equivalent to the tile surface may be a descending and slanting slope toward the tile surface.

The composite plate-like tile may have a ridge extending in a longitudinal direction formed on a side equivalent to the back of the tile on the upper side.

A method for producing a composite flowerpot using the method for producing a composite ceramic structure, wherein the clayware body or the molding body for firing pottery is pot-shaped and the splicing step is to insert a body for firing into a clayware body or a molding body for firing pottery.

Further, the method for producing a composite flowerpot according to the present invention comprises the steps of: preparing a pot made of pottery and precursor slurry of porous concrete; filling the precursor slurry into the pot; and curing the filled precursor slurry.

In the method for producing a composite plate-like tile using the method for producing a composite ceramic structure according to the present invention, the clayware body or the molding body for firing pottery and the body for firing are plate-shaped, and the splicing step is to overlap the body for firing with the clayware body or the molding body for firing pottery.

Furthermore, the method for producing a composite ceramic structure according to the present invention comprises the steps of: inserting a body for firing containing a foam agent and an evanescent granule or an evanescent porous body into a hollow of a tubular clayware body or a molding body for firing pottery; forming a columnar body by firing the clayware body or the molding body for firing pottery; and cutting or fracturing the columnar body at a cut surface or a fracture cross section parallel with its longitudinal direction.

The composite plate-like tile according to the present invention is obtained by the method for producing a composite ceramic structure and includes a catching part attachable and removable to and from the worked surface.

A roof insulation structure according to the present invention comprises: a plurality of composite flowerpots arranged on the roof of a building; and a plant planted on the upper surface of the porous body.

In the roof insulation structure, the plant may be sedum or moss.

A wall surface structure according to the present invention comprises: a plurality of composite plate-like tiles arranged on the wall surface of a building in the row state; and a plant cultivated on the face of the composite plate-like tiles.

In the wall surface structure, the plant may be sedum, moss or an ivy kind.

In the wall surface structure, a water-supply means for supplying water to the plurality of composite plate-like tiles arranged in the row state may be provided on a further upper level to the highest level of the plurality of composite plate-like tiles.

The water-supply means may comprise: a water-supply pipe located upwardly and horizontally on the highest level of the composite plate-like tiles; a holding tile located upwardly on the highest level of the composite plate-like tiles having a locking part attachable and removable to and from the worked surface and placing the water-supply pipe on the face side; and a covering tile located upwardly of the holding tile having a cover for covering the water-supply pipe and an engaging part attachable and removable to and from the worked surface.

In the wall surface structure with a water-supply means according to the present invention, the catching part of the composite plate-like tile, the locking part of the holding tile, and the engaging part of the covering tile are virtually in the same shape.

A base for planting according to the present invention is composed of the composite ceramic structure, wherein the pottery and the porous ceramic body are plate-shaped, and the porous ceramic body is arranged on the face and is overlapped with the pottery.

Further, the base for planting according to the present invention is composed of the composite ceramic structure, wherein the pottery and the porous concrete structure are plate-shaped, and the porous concrete structure is arranged on the face side and is overlapped with the pottery.

A plant ceramic compound according to the present invention is made by putting a plant on the face of the base for planting.

In the plant ceramic compound, its plant may be sedum or moss.

The wall surface structure according to the present invention comprises: a base wall surface; a plurality of objects arranged outside the base wall surface in a surface direction of the base wall surface to be attachable and removable to and from the base wall surface; and a holding part fixed to the base wall surface and arranged in a surface direction of the base wall surface for holding the plurality of objects to be engaged, wherein the plurality of objects to be engaged comprise a plurality of plate-like tiles respectively having a catching part for catching the holding part on the back for arranging on the base wall surface in the row state and a pot-shaped tile having a catching part on the holding part, and the pot-shaped tile being engaged with a portion of the catching part where the plate-like tiles are not engaged.

In the wall surface structure, the plate-like tiles may be composite plate-like tiles. A plant may grow on the upper surface of the ceramic porous body in the wall surface structure. Further, the plant may be sedum or moss.

In the wall surface structure, aside equivalent to the tile face of the upper side of the plate-like tile may be a descending and slanting slope toward the tile face.

In the wall surface structure, a ridge extending in a longitudinal direction of the plate-like tile may be formed on a side equivalent to the back of the tile located on the upper side of the plate-like tile.

In the wall surface structure, a transverse groove extending in a longitudinal direction of the plate-like tile may be formed on the lower side of the plate-like tile.

In the wall surface structure, a water-supply means for feeding water to the plate-like tiles is provided on further upper level to the highest level of the plurality of plate-like tiles.

In the wall surface structure, the means for supplying water may comprise: a water-supply pipe located upwardly on the highest level of the plate-like tiles with stretched horizontally; a holding tile located upwardly on the highest level of the plate-like tiles having a locking part attachable and removable to and from the worked surface and placing the water-supply pipe on the face side; and a covering tile located upwardly of the holding tile and covering the water-supply pipe having a cover to cover the water-supply pipe and an engaging part attachable and removable to and from the worked surface.

In the wall surface structure with a water-supply means, the catching part of the plate-like tile, the locking part of the holding tile, and the engaging part of the covering tile may have virtually the same shape.

Further, in the wall surface structure according to the present invention, the plate-like tiles are arranged in a lattice shape to constitute tile surfaces, a missing part of each of the plate-like tiles is present on the tile surface, and the pot-shaped tile is engaged with the holding part corresponding to the missing part, and the integral multiple of the width and that of the horizontal width of the plate-like tiles are virtually equal, so that a surface of the side on the base wall surface of the pot-shaped tile is fitted into the missing part.

In the wall surface structure, the integral multiple of the height of the pot-shaped tile and that of the vertical width of the plate-like tiles may be virtually equal.

Further, the pot-shaped tile according to the present invention is used for the wall surface structure, which comprises: a face side wall opened upward and faced to outside space opposed to a base wall surface to be attached; a back side wall faced to the base wall surface, and a pair of side walls; a bottom wall enclosed with these side walls; and a catching part to be engaged with the holding part arranged on the back side wall.

In the pot-shaped tile, the integral multiple of the width and that of the horizontal width of the plate-like tile may be virtually equal.

In the pot-shaped tile, the integral multiple of the height and that of the vertical width of the plate-like tiles may be virtually equal.

In the pot-shaped tile, a ridge projecting upward and extending in a transverse direction may be formed on the upper surface of the back side wall.

In the pot-shaped tile, a slope descending and slanting from the upper surface of the back side wall toward the front may be formed.

In the pot-shaped tile, a transverse groove extending in a crosswise direction may be formed on the outer surface of the bottom wall.

### ADVANTAGES OF THE INVENTION

A composite ceramic structure according to the present invention is a stable structure without the separation of pottery and a porous ceramic body at each of the boundary because the pottery and the porous ceramic body are firmly bonded at each boundary by sintering.

There is no possibility that a composite flowerpot according to the present invention makes the surrounding area dirty by scattering earth due to the touch of people and objects when installed and used or flowing or scattering earth mixing with wind and rain without the use of earth. Further, the closely spacing of the composite flowerpot on the roof of the building makes it possible to prevent plants of flying seed from growing from the floor of the roof.

Moreover, the composite flowerpot according to the present invention is useful to prevent heat-island phenomenon when installed on the roof of the building. The composite flowerpot according to the present invention greatly simplifies the work of installation because the flowerpot can be installed by carrying it and placing it without putting earth into it. Furthermore, the composite flowerpot enables easy changes in placement corresponding to the change of placement on the roof because of its light weight. In addition, there is a few fear of mosquito larva or legionella bacteria causing as well as little maintenance and management.

In addition to these advantages, the composite flowerpot according to the present invention can easily be an appearance and an outside shape similar to conventional flowerpots because its outer wall is composed of pottery. More specifically, it is possible to bake an overglaze or patterns in the production process and make special formation by selecting each kind of potter's clay or give unevenness peculiar to porcelain to its surface. The outer shape, such as barrel shape or square drum shape can be easily formed.

Additionally, the composite flowerpot according to the present invention can be designed to be a shape to match with the surrounding nature and the natural color without any possibility of making the surrounding area dirty by the scattering of earth when installed and touched by people or objects or scattering of wind and rain without requirement of excess manpower, so that the composite flowerpot can be used as a promising structure element to form a biotope by putting on plants.

A composite tile according to the present invention has favorable thermal insulating properties to be used for the outer wall of a building. Further, the composite tile has water retention and a three-dimensional network suitable for keeping the roots of the plants, which result in favorable growing of plants, such as sedum or moss or ivy plants, such as ivy. Furthermore, there is no possibility of the pottery and the porous ceramic body being removed from each other even after a long period of use because they are firmly bonded by sintering.

Since the composite tile is attachable and removable to and from the outer wall of the building, a partial exchange is possible. When plants run dry or are damaged, the composite tile where the plants run dry or are damaged can be easily exchanged. Further, in view of sunlight for even growing, periodical movement of the position to be attached can be made.

In a dry tile structure according to the present invention, a wall surface structure having a beautiful appearance by a wall surface ornament using plants is provided to realize the heightening of the added value of the dry tile structure.

The use of a wall surface structure of the present invention realizes a return to nature-type space and provides people who are in the space with comfort.

The wall surface structure of the present invention can decrease the temperature of the wall surface of a building at lower cost to contribute energy savings because of a decrease in air-conditioning load.

The wall surface structure according to the present invention can realize wall surface decoration using plants and decorations in such an embodiment that is easy to maintain.

The wall surface structure according to the present invention is capable of improving thermal insulating properties of the wall surface of a building as well as materializing a wall surface structure using plants and decorations in such an embodiment that is easy to maintain.

The wall surface structure of a building according to the present invention is capable of contributing to energy savings because of a decrease in cooling load and materializing the wall surface decoration using plants in such an embodiment that is easy to maintain as well as decreasing the temperature of the wall surface of the building at low cost.

The dry tile structure according to the present invention is capable of improving thermal insulating properties of the wall surface as well as providing a wall surface structure with beautiful appearance by surface wall decoration using plants and ornaments.

In the dry tile structure according to the present invention, healing effects can be obtained by the odor from the wall surface by arranging aromatics.

### BEST MODE FOR EMBODIMENTS OF THE INVENTION

A preferred embodiment of the present invention will now be described in detail. A clayware body which is a precursor of pottery, such as ceramic ware and clay which is a material for pottery, such as ceramic ware are used in the present invention. Clay becomes unglazed pottery by forming to be fired, but in the present invention, a foaming agent, such as SiC is mixed before firing. SiC is preferably mixed at 1 to 10 weight % to the dry weight of clay.

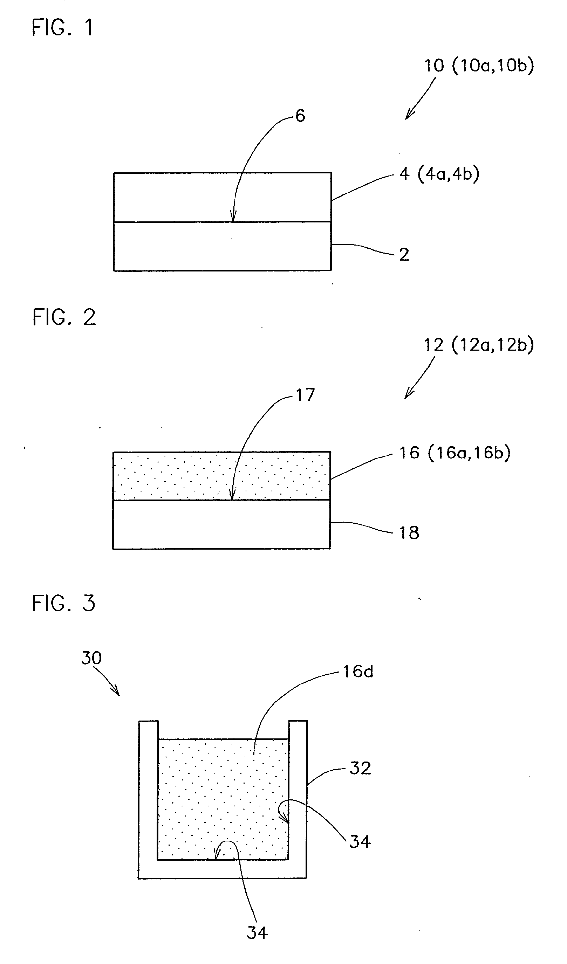

Next, clay including a foam agent by being mixed is formed in a desired shape. As is shown in FIG. 1, a clayware body 2 and a body 4 for firing composed of formed clay are spliced at a spliced surface 6 to form a composite precursor 10. A composite ceramic structure 12 as shown in FIG. 2 is obtained when glost firing is performed on the composite precursor 10. A composite ceramic structure 12 comprises: pottery 18 formed by firing the clayware body 2; and a porous ceramic body 16 formed by firing the body 4 for firing, which is a stable structure without any separation at a boundary 17 because each boundary 17 is firmly bonded by sintering.

In another embodiment of the present invention, evanescent granules composed of a resin, such as a granule-like phenol resin are mixed with clay before firing. And then clay containing evanescent granules is molded in a desired shape. As shown in FIG. 1, a clayware body 2 and a body 4a for firing composed of the molded clay are spliced at a spliced surface 6 to form a composite precursor 10a. A composite ceramic structure 12a as shown in FIG. 2 is obtained by glost firing the composite precursor 10a. A composite ceramic structure 12a comprises: pottery 18 composed of ordinary pottery obtained by glost firing the clayware body 2; and a porous ceramic body 16a, which are bonded at its boundary 17 by sintering. This composite ceramic structure 12a is also a stable structure without separation at the boundary 17 because the pottery 18 and the porous ceramic body 16a are firmly bonded at the respective boundary 17.

Material of the evanescent granules is preferably a resin. The resin may be either a natural resin or a synthetic resin. The resin preferably generates gases when fired. The evanescent granules may contain gases. The material of the evanescent granules may be carbon. The evanescent granules are preferably mixed at the ratio of 5 to 50 capacity % to the capacity of the clay.

In a further embodiment of the present invention, an evanescent porous body, such as urethane foam is used. The clay is changed into mud to be impregnated into the evanescent porous body to form a composite body 4b for firing which comprises clay and the evanescent porous body. The attached weight of mud is preferably about 0.2 to 0.4 g to the evanescent porous body of 1 cm × 1 cm × 1 cm. As shown in FIG. 1, when the clayware body 2 and the composite body 4b for firing are spliced at the splice surface 6 to form the composite precursor 10b. A composite ceramic structure 12b as shown in FIG. 2 is obtained by glost firing the composite precursor 10b. The composite ceramic structure 12b is formed by the bonding of the pottery 18 composed of ordinary pottery and a porous ceramic body 16b in which the evanescent porous body is burnt out by glost firing at each boundary 17 using sintering caused by this firing. This composite ceramic structure 12b is also a stable structure without separation at the boundary 17 because the pottery 18 and the porous ceramic body 16b are firmly bonded at the respective boundary 17.

Ceramic structures 12, 12a, and 12b obtained in such embodiments are favorably applicable to flowerpots and tiles each having a novel configuration.

An embodiment wherein ceramic structures 12, 12a, and 12b of the present invention applied to flowerpots will now be described in detail. As shown in FIG. 3, in a composite flowerpot 30 according to the present invention, most of the inner space including an inner bottom of pot-shaped pottery 32 is filled with a porous ceramic body 16d. The porous ceramic body 16d is one mass. The pottery 32 and the porous ceramic body 16d are bonded at the boundary 34 with the porous ceramic body 16d on the inner wall surface of the pottery 32 by sintering.

The composite flowerpot 30 in such configuration can be obtained by filling empty pottery 32 or empty unglazed pottery 32 with clay mixed with the aforementioned foam agent and clay mixed with evanescent granules and firing the pottery 32 together with the clay filled. Alternatively, the composite flowerpot 30 can be obtained by molding an evanescent porous body so that the shape of the inner wall surface of the pottery 32 can match the shape of the outer surface of the evanescent porous body and impregnating clay in the mud state in the molded evanescent porous body to form a composite body for firing which comprises the clay and the evanescent porous body, and firing the pottery 32 together with the composite body for firing after inserting the composite body for firing into the pottery 32.

In this embodiment, molded clay in virtually similar to the shape of the pottery 32 instead of the pottery 32 may be used. More particularly, the composite flowerpot 30 can be obtained by inserting clay which foams by firing and the composite body for firing into the clay molded in a pot shape and firing the molded clay together with the inserted clay and the composite body for firing.

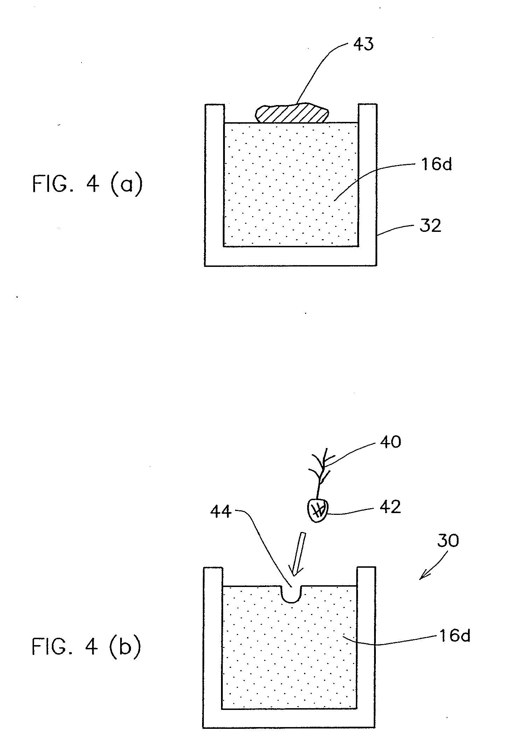

In the composite flowerpot 30 obtained in such a manner, plants are planted (grow) in the portion of the porous ceramic body 16d. Low plants which are strong in dry, such as sedum (general name of Rhacomi trium canescens Brid) are preferable for the plants to plant in the composite flowerpot 30. Alternatively, moss, such as Canescens and Hypnacea or the like is preferable because the plant is low and suitable to grow on the surface of the porous ceramic body 16d. As shown in FIG. 4(a), a seedling 43 is preferably rooted on the upper surface of the porous ceramic body 16d as a method for rooting a plant in a portion of the porous ceramic body 16d after impregnating a liquid fertilizer or water into the porous ceramic body 16d beforehand. This embodiment is preferably applied to moss, such as sedum or Canescens and Hypnaceae or the like.

An another example of rooting a plant in a portion of the porous ceramic body 16d is, as shown in FIG. 4(b), to dispose a seedling 40a on the upper surface of the porous ceramic body 16d by fitting a root portion 42 of the seedling 40a covered with bog moss.

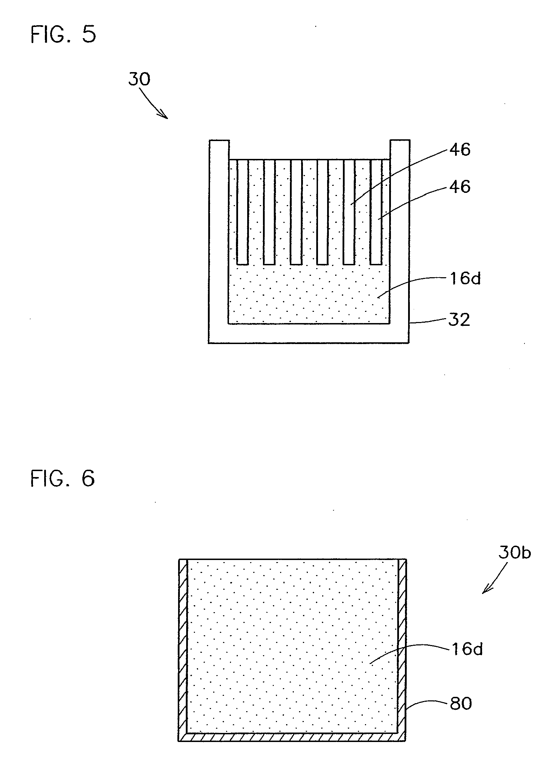

In the composite flowerpot 30, as shown in FIG. 5, a plurality of thin holes 46 may be formed from the upper surface of the porous ceramic body 16d to downward. The growth of the root of the plant put down is promoted and the plant is firmly fixed to the porous ceramic body 16d.

In another embodiment of the present invention, like a composite flowerpot 30b shown in FIG. 6, the surface of the porous ceramic body 16d may be coated with a coating film 80 except for the upper surface. The coating film 80 prevents water contained in the porous ceramic body 16d from leaking out to the outside, so that the composite flowerpot 30b maintains water retentivity. An example of the coating film 80 is a resin coating film with ordinary paint. Alternatively, the coating film 80 may be a glaze film using a glaze. In an embodiment shown in FIG. 6, a foaming resin body may be used instead of the porous ceramic body 16d, but in this case, an environmental pollution problem occurs because the unnecessary flowerpot 30b is unable to return to the earth by crushing the porous ceramic body 16d when it is abandoned. Foaming concrete may be used as a substitute for the porous ceramic body 16d, but in this case, the kind of plants to grow is limited due to strong alkaline. Although the glaze film has little environmental load when the composite flowerpot 30b is abandoned, which is preferable, the glaze film is not applicable to a foaming resin or foaming concrete.

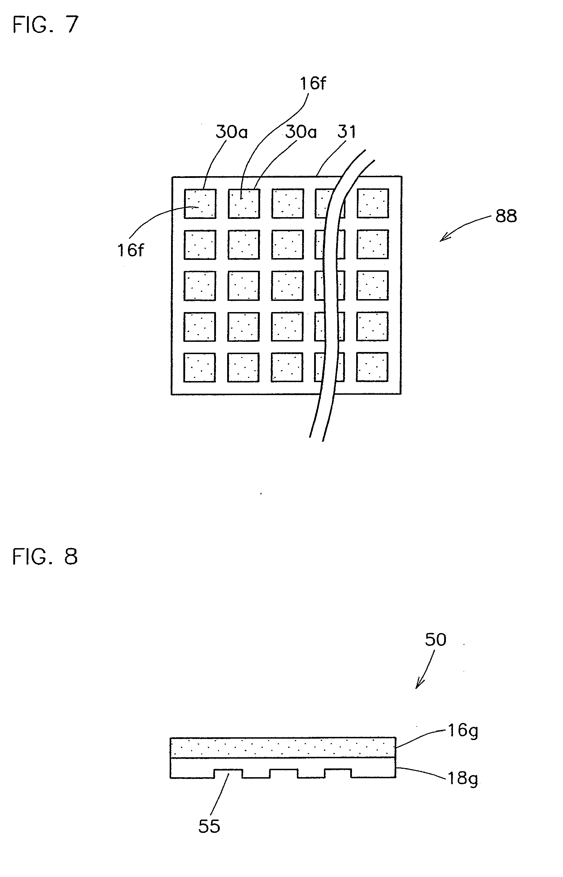

A composite flowerpot of the present invention is preferably usable, especially for greening of the roof of a building. As shown in a top view of FIG 7, the disposing of the composite flowerpots 30a in a square shape of the present invention on a roof 31 as a roof thermal insulation structure 88 exerts thermal insulation effects of porous ceramic bodies 16f and solar heat rejection of plants put in the composite flowerpots 30a, such as sedum which are not shown in the figure, moisture loss effects of leaves of the plants, and moisture loss effects from the porous ceramic bodies 16f, which lead to contribute to thermal insulation and cooling of the building. Sedum is well rooted to the porous ceramic bodies 16f and can grow without the need for frequent water feeding, so that the plant is suitable for the roof insulation structure 88. Alternatively, moss, such as Canescens and Hypnaceae or the like which is low and suitable to grow on the faces of the porous ceramic bodies 16f is preferable.

Since the composite flowerpots 30a according to the present invention used in such a manner do not contain earth, there is no fear of scattering the soil due to the touch of people and objects when installed and used or flowing or scattering the soil mixed with wind and rain. Further, the closely spacing of the composite flowerpot on the root of the building makes it possible to prevent plants of flying seeds from growing from the floor of the roof.

Furthermore, the composite flowerpots 30a according to the present invention can be designed to be a shape to match with the surrounding nature and the natural color without any possibility of making the surrounding area dirty by the scattering of earth when installed and touched by people or objects or scattering the soil mixed with wind and rain without requirement of excess manpower, so that the composite flowerpots can be used as a promising structure element to form a biotope by putting on plants.

The composite flowerpots 30a according to the present invention do not need frequent water feeding and are easy to maintain because the porous ceramic bodies housed in a container are capable to retain a large amount of water.

Additionally, in conventional flowerpots, earth and granules to be put into the flowerpots need to be carried separately to the installation place, such as the roof of a high-rise building and need work to calculate the earth and the granules to put into the flowerpots on the roof one by one. However, the composite flowerpots 30 according to the present invention can be installed, if only the composite flowerpots 30 are carried to the roof to be disposed to use them without additional work, resulting in significant simplification of installation work.

Furthermore, the composite flowerpots 30a are light, so that it is easy to change the installation work corresponding to changes in arrangement on the roof.

In the present invention, the porous ceramic bodies 16d housed in the pottery 32 of the composite flowerpots (30, 30a) may be respectively one massive porous ceramic body specially fired in the shape to be previously housed in the pottery 32. More specifically, after being specially fired in the shape to be previously housed in the pottery 32, one massive porous ceramic body may be housed in the pot-shaped pottery 32. In this case, the massive porous ceramic body can be selected or exchanged according to the kind of plants to grow.

In the present invention, the porous ceramic bodies 16d housed in the pottery 32 of the composite flowerpots (30, 30a) may be respectively one massive porous concrete specially fired in the shape to be previously housed in the pottery 32. More specifically, after being specially fired in the shape to be previously housed in the pottery 32, one massive porous concrete may be housed in the pot-shaped pottery 32. Alternatively, a precursor of foaming concrete may be poured into the pottery 32 to be cured.

The use of clayware as pottery wherein the porous concrete is housed enables to have suitable permeability to the pottery specific to clayware in the composite flowerpots where porous concrete is used as a substitute for the porous ceramic bodies 16d. Further, the use of an over glazed pot as pottery enables to form a composite flowerpot having a luxury, appearance.

Porous concrete can be obtained by curing cement, a micro-aggregate, such as slag fine powder, fly ash, gravel, foam glass, a discontinuous fiber, precursor slurry including a foaming agent, such as aluminum metal powder while foaming. Alternatively, porous concrete can be obtained by curing cement, a micro-aggregate, and precursor slurry including a number of bubbles. Typical examples of micro-aggregate are a natural light-weight aggregate (Oshima volcanic lapillus, volcanic lapillus, and the like), an artificial light-weight aggregate (for example, Mesalite, Asanolite, and the like), or Pearlite, and the like. 70 to 150 weight parts of a micro-aggregate is preferably mixed with 100 weight parts of cement. Bubbles are preferably mixed with slurry at the rate of 15 to 30 volume %.

A composite flowerpot can be obtained by filling the pottery 32 with such precursor slurry to be cured. This composite flowerpot is a composite ceramic structure formed by the bonding of pottery and a porous concrete body by the curing of the slurry. The pottery and the porous concrete body are firmly bonded because the slurry poured into recesses of fine irregularity on the surface of the pottery to be cured.

Further, in the present invention, as mentioned above, the porous concrete body housed in the pottery 32 may be one massive porous concrete body specially formed in the shape to be previously housed in the pottery 32. More particularly, one massive porous concrete body may be housed in the pot-shaped pottery 32 after being specially formed and cured in the shape to be previously housed in the pottery 32. In this case, the massive porous concrete body can be selected or exchanged according to the kind of plants to grow.

Furthermore, in the present invention, one massive foaming resin body specially formed in the shape to be previously housed in the pottery 32 may be housed in the pottery 32. The foaming resin body needs to have continuous holes, such as an urethane sponge. The concrete body of the foaming resin body can be selected and exchanged according to the kind of plants to grow.

An embodiment for applying ceramic structures 12, 12a, and 12b of the present invention to tiles will now be explained. As is shown in FIG. 8, a composite tile 50 comprises plate-like pottery 18g and a plate-like porous ceramic body 16g, wherein the porous ceramic body 16g is arranged on the face side of the composite tile 50 and is overlapped with the pottery 18g.

Composite tiles have water retention and porous surfaces as well as superior thermal insulation when used for outer walls of a building, so that the composite tiles are suitable for growing plants by putting plants and allowing plants with adhering roots, such as ivy to creep. The porous surfaces are suitable for growing adhering roots. Further, there is no possibility for the pottery 18g and the porous ceramic body 16g being peeled off even when used for outer wall surfaces of a building for a long term because they are firmly bonded by sintering. The composite tile 50 is used with the porous ceramic body 16g placed outside the worked surface, but the composite tile 50 may be used with the pottery 18g placed outside the worked surface. In this case, moreover, superior thermal insulation of the worked walls is obtained and an adhesive, such as mortar used in this adhesion forms rigid adhesion up to irregularities on the surface of the porous ceramic body 16g.

Additionally, porous concrete may be used as a substitute for the porous ceramic body 16g in the composite tile of the present invention.

The porous concrete may be obtained by curing cement, slag fine powder, fly ash, gravel, foaming glass, a micro-aggregate, such as a foaming resin piece and precursor slurry including a forming agent, such as aluminum metal powder at the time of bubbling. Alternatively, porous concrete may be obtained by curing precursor slurry including cement, a micro-aggregate, and a number of bubbles. Examples of micro-aggregates are natural light-weight aggregates (for example, Oshima volcanic lapillus, Shinmei volcanic lapillus or the like), artificial light-weight aggregates (for example, Mesalite, Asanolite, or the like) or Pearlite and the like. It is preferable to mix 70 to 150 weight parts of micro-aggregate with 100 weight parts of cement. Bubbles are preferably mixed with slurry at the volume % of 15 to 90.

A composite tile can be obtained by disposing such precursor slurry enclosed by a frame around it on the pottery 18g to be cured.

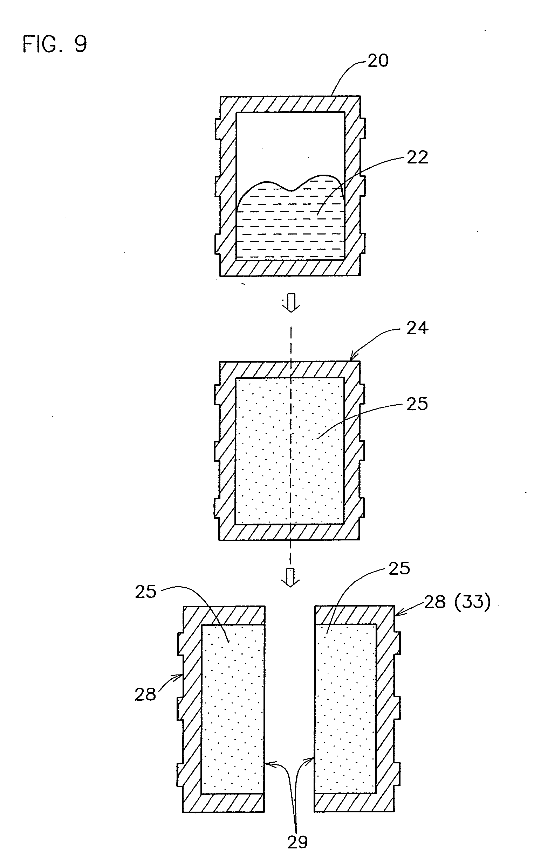

In the present invention, a composite ceramic structure may be produced in the aspect shown in FIG. 9. In FIG. 9, the aforementioned body for firing composed of clay 22 including a foaming agent or a body for firing composed of clay including evanescent granules or a body for firing formed by impregnating clay in the mud state (composite body for firing) is inserted into a hollow part of tubular unglazed pottery 20 and is fired together with this inserted body 22 for firing to obtain columnar pottery (columnar body) 24. The interior of the pottery 24 is filled with porous ceramics 25. Subsequently, this columnar pottery 24 is cut or broken along a cut area (or a ruptured phase) 29 and is divided in a longitudinal direction to obtain composite ceramic structures 28. The composite ceramic structures 28 are used as composite tiles 33 by placing the cut area (or the ruptured phase) 29 on the face. Composite ceramic structures used for each kind of use by altering the size and the shape of the outer surface can be obtained by this method. For example, a plate-like composite ceramic structure having an area of 40 cm × 40 cm and a thickness of 5 cm can be used by laying on the roof of the building and serving both as an insulation material and floor for growing plants. Further, the operation for breaking the pottery 24 along a ruptured phase can be performed in accordance with the operation for breaking by dividing the stone with a jig, such as a borer.

In this embodiment, when the body 22 for firing including a foaming agent is used, the body 22 for firing fills the hollow part of the pottery 20 to push itself against the inner wall surface of the pottery 20 in a process of increasing the volume of the body 22 for firing in the hollow part of the pottery 20 at the time of foaming. Thus, a boundary between the inner wall surface of the pottery 20 and the porous ceramics 25 is perfectly filled with the porous ceramics 25.

In the composite tile 33, the cut area (or ruptured phase) 29 may be used as a back bonded on the worked surface. A number of fine irregularities with sharp edges in the cancellous state due to the cutting are formed on the surface of the cut area (or ruptured phase) 29, so that the composite tile 33 has excellent bonding with an adhesive material, such as mortar, or the like. Further, the worked walls worked in this manner are superior in thermal insulation.

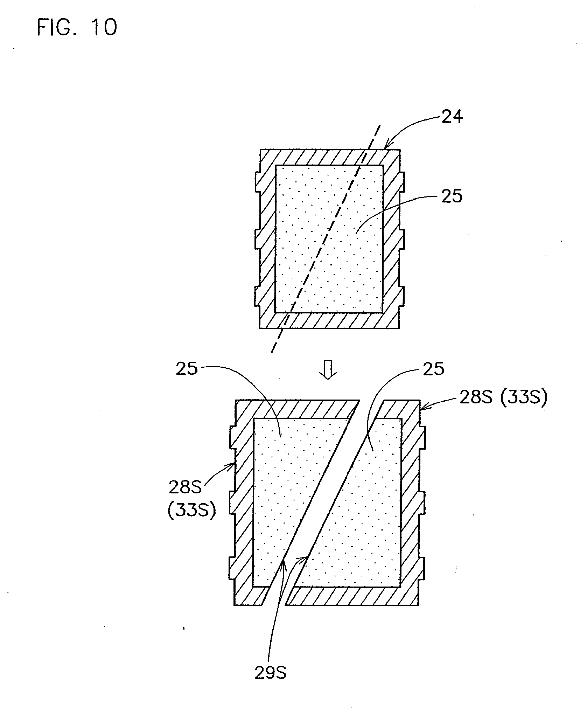

As shown in FIG. 10, the pottery 24 may be cut or broken in a vertical direction and at the oblique cut area (or ruptured phase) along the longitudinal direction. In this case, a composite tile 33s (composite ceramic structures 28s) having respective surface 29s slanting to the direction of the worked surface is obtained. The worked wall surfaces worked using the composite tile 33s have various projections and depressions and are superior in aesthetic value.

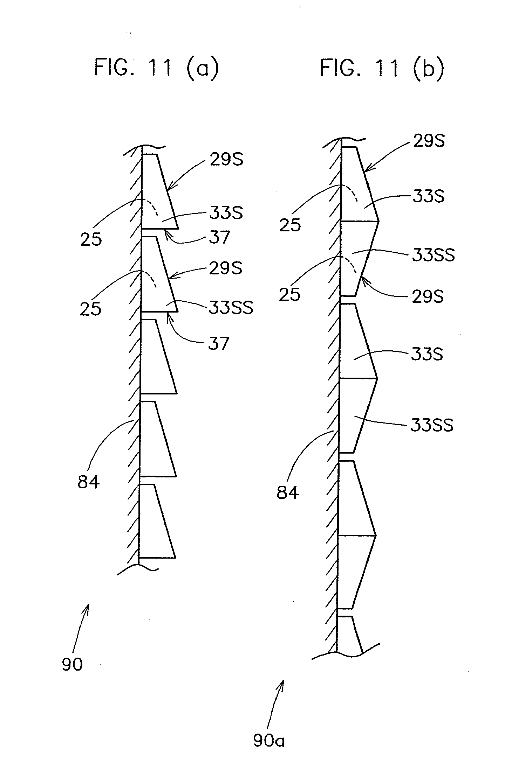

An embodiment of worked wall surfaces using composite tile 33s is shown in a cross-sectional schematic view (FIG. 11). FIG. 11 (a) shows a wall surface structure 90 so disposed that surfaces 29s may be faced upward. FIG. 11 (b) shows a wall surface structure 90a so disposed that the direction of surfaces 29s may be alternately upward and downward to upward and downward directions of the surface of a worked wall 84. Composite tiles 33s disposed in such a manner that the surfaces 29s face upward effectively retain abundance of rainwater in the porous ceramics 25 because the surfaces 29 effectively receive rain. After a lapse of certain retention time, excess of retained rainwater overspills from the surfaces 29s. Part or all of rainwater which overspills reaches the downward composite tiles 33ss passing through lower surfaces 37 or the lower end to be absorbed into the porous ceramics 25 of the downward composite tiles 33ss. Such a flow and residence of water give good effects on the growth of plants planted (grow) in the composite tiles 33ss which are not shown in the figure.

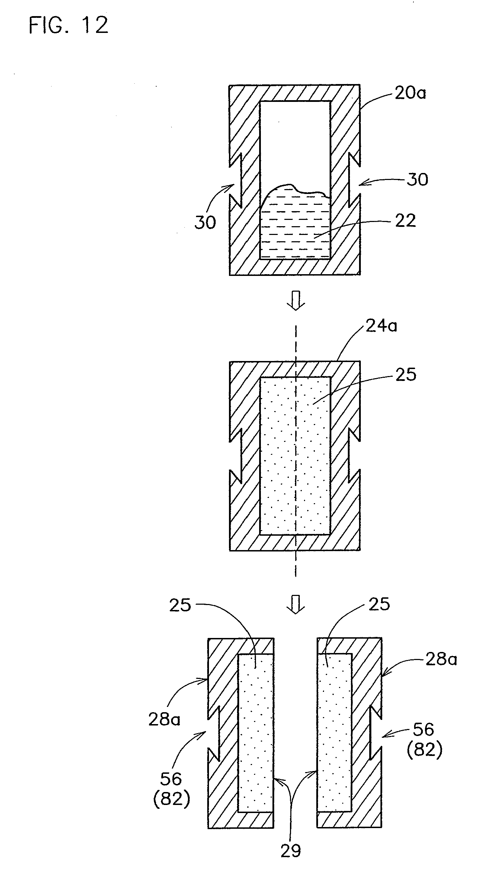

As shown in FIG. 12, tubular pottery may be pottery 20a provided on the outer surface wherein dovetail grooves 56 are formed. The dovetail grooves 56 are formed on the surfaces corresponding to the back surfaces of composite tiles 28a. The dovetail grooves 56 become catching parts 82 to engage with the dovetail of ribbed projections arranged on the outer wall surface of a building. Thus, the composite tiles 28a are engaged with the outer wall surface of the building in a attachable and removable manner with a dovetail joint to be inserted into the outer wall surface of the building. Cut areas (or ruptured phases) 29 become the face surfaces of the composite tiles 28a. In this way, vertical walls are formed by a dry method using the composite tiles 28a of the present invention. The engagement with the outer wall surface of the building may be made by catching parts to engage with such jigs for engagement arranged on the outer wall surface that are disclosed in Japanese Patent Publication No. 2002-4545. The dovetail of the ribbed projection arranged on the outer wall surface of the building may be such dovetail jigs that are disclosed in Japanese Publication No. 2001-90314.

A partial exchange of the inserted composite tiles 28a becomes possible because the composite tiles 28a are inserted into the outer wall surface of the building in such a manner attachable and removable to and from the outer wall surface. When plants, such as the above-mentioned sedum and moss are put onto the face of the composite tiles 28a, part of the composite tiles 28a where plants are dead is exchanged to newly grow plants or such composite tiles 28a can be exchanged to the composite tiles 28a where plants have previously planted (grown). Further, it is possible to move the position to attach to by periodically performing a mutual exchange in view of sunlight so that the plants may equally grow.

The composite tiles 28a may be inserted into the internal surface of the building. Decoration effects on the internal surface can be obtained by putting plants on the face of these composite tiles 28a. It is difficult to feed water to the internal surface frequently, so that sedum is preferably used as plants because sedum does not need frequent watering to grow. Alternatively, moss, such as Canescens and Hypnaceae or the like are preferable because these plants are low and suitable to grow on the face of the porous ceramics 25.

In embodiments shown in FIGs. 9, 10 and 12, molded clay virtually in the same shape may be used for a substitute for tubular pottery 20 or tubular pottery 20a. More specifically, columnar pottery 24 or columnar pottery 24a may be formed by filling the hollow part of the clay molded in the columnar shape with a body for firing 22 to foam by firing to be simultaneously fired.

In embodiments shown in FIGs. 9, 10, and 12, a body is molded by extruding and is fired in biscuit after drying to obtain tubular pottery 20 or tubular pottery 20a. Further, molded clay is a body molded by extruding before biscuit firing.

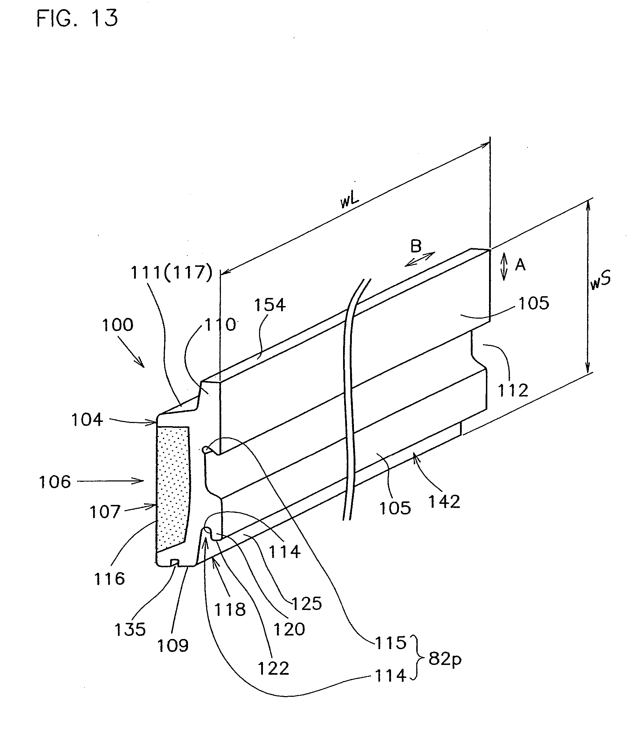

FIG. 13 shows one example of another aspect of a composite tile according to the present invention. In FIG. 13, a composite plate-like tile 100 is formed by overlapping the portion of pottery 118 and the portion of a plate-like porous ceramic body 116. The pottery 118 is so constructed that a groove 106 is formed in a longitudinal direction on a surface corresponding to a face 104 of the composite plate-like tile 100 and the groove 106 is filled with the porous ceramic body 116. An exposed surface 107 of the porous ceramic body 116 also comprises a face of the composite plate-like tile 100.

A ridge 110 extending beyond upwardly of a short width A (hereinafter referred to as short width direction) extending to a long width direction B (hereinafter referred to as long width direction) of the composite plate-like tile 100 is formed on an upper surface 111 of the composite plate-like tile 100 and a groove 112 for housing extending to the long width direction is formed on the back 105 of the composite plate-like tile 100. In the internal surface of the groove 112 for housing, a catching groove 115 is further formed on the corner of the upper bottom in the long width direction.

A locking groove 114 extending to the long width direction is formed on a lower surface 109 of the composite plate-like tile 100. Further, a groove 135 for feeding water extending to the long width direction is formed on the more face side than the locking groove 114 in the lower surface 109. A ridge 120 positioned between a side wall 119 near the back 105 and the back 105 of the locking groove 114 and caused by the formation of the locking groove 114 is missing in its lower end as if it were uniformly shaved and a lower surface 122 of the ridge 120 is positioned upper than the lower surface 109, which leads to the formation of a step 140 between a side wall 125 near a face 106 and the back 105 on the lower surface 122 and a recess area 142 exists at a crossing corner between the lower surface 122 and the back 105 due to the step 140.

The composite plate-like tile 100 of such a structure is produced in accordance with, for example, the process shown in FIG. 9. More specifically, the structure is that the hollow part of the tubular body in the shape faced oppositely to be symmetric to a portion of the pottery 118 is filled with a precursor of the porous ceramic body 116 to be fired and the hollow part of the tubular body faced oppositely to be symmetric is filled with the porous ceramic body. This structure is cut or broken at a plane of symmetry and is divided at certain length in the longitudinal direction to produce the composite tile 100.

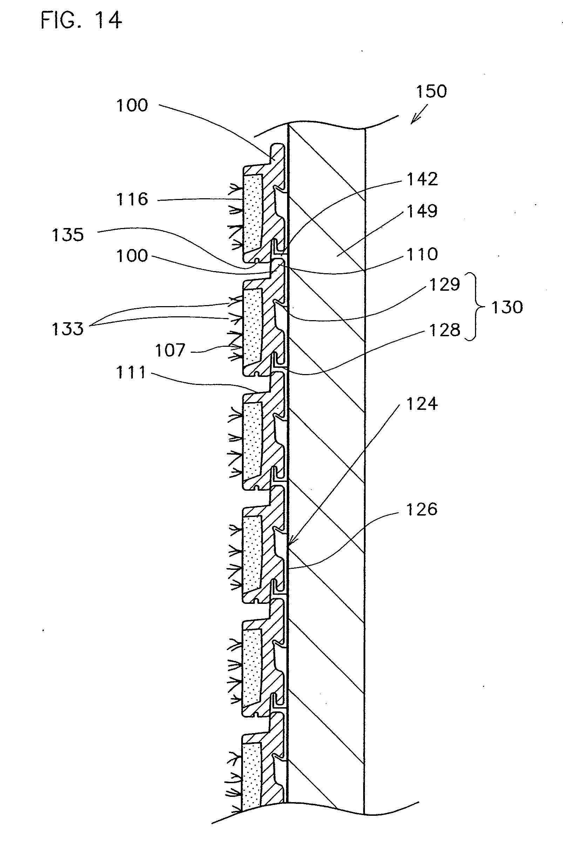

FIG. 14 shows an embodiment wherein the composite plate-like tile 100 is put on an outer wall 149. The composite plate-like tile 100 is locked to the outer wall 149 through a locking plate 124 fitted to the outer wall 149. The locking plate 124 comprises a substrate 126 and a plurality of lengthy locking supports 130 arranged up and down horizontally to the longitudinal direction on the face of the substrate 126. A locking support 130 comprises a lower supporting member 128 and an upper supporting member 129 arranged upwardly of the lower supporting member 128. The lower supporting member 128 is composed of a long member in the shape of L in section mutually connected at one end along the longitudinal direction by intersecting each surface of one plain band-type plate and another plain band-type plate, wherein the surface of one plain band-type plate is arranged parallel to the substrate 126 and other end along the longitudinal direction is fixed to the substrate 126. The lower supporting member 128 is composed of another long member in such a shape that a continuous plate is folded at a crease along the longitudinal direction into a sectional dogleg shape, and is fixed to the substrate 126 at an end along the longitudinal direction by directing diagonally to its surface upward.

The composite plate-like tile 100 is engaged with the locking support 130. More specifically, the lower supporting member 128 engages with the locking groove 114 (FIG. 13) and the upper supporting member 129 engages with the catching groove 115 (FIG. 13). Further, the composite plate-like tiles 100 are arranged on one surface from side to side and up and down along the wall surface of the outer wall 149 and the adjacent up and down composite plate-like tiles 100 are combined by inserting the recess areas 142 of the upward composite plate-like tile 100 into the ridges 110 of the downward composite plate-like tile 100. A catching part 82p (FIG. 13) to be fitted to the worked surface comprises the locking groove 114 and the catching groove 115.

When the cross-sectional shape of the lower supporting member 128 or the upper supporting member 129 engages with the locking groove 114 or the catching groove 115, the shape is not limited to L-shape and dog-leg shape.

A wall surface structure 150 of the present invention in which the composite plate-like tiles 100 are fitted to the outer wall 149 shown in FIG. 14 establishes an outside superior thermal insulating structure of the building by the effective disposition of the porous ceramic bodies 116 having superior thermal insulation. Further, the wall surface structure 150 is suitable for firmly rooting plants 133 to the outer surface of the building as well as the afore-mentioned composite tiles 50, 28, and 28s or the like because the porous ceramic bodies 116 are exposed to the face.

Furthermore, in the wall surface structure 150, water, such as rain water humidified and saturated by being attached to the upward composite plate-like tiles 100 falls from the lower end of the face 104 of the upward composite plate-like tiles 100 to the part of the face side of the upper surface 111 of the composite plate-like tile 100 just below and reaches the upper end of the face 104 (FIG. 13) of the respective composite plate-like tiles 100 from the part where water falls and then spreads all over the up and down directions of the face 104 (FIG. 13) of the composite plate-like tile 100 just below. The travel of water is successively realized on the downward composite plate-like tiles 100 from the top stage of the composite plate-like tile 100 to equally spread each of the face of the whole top and down of the composite plate-like tiles 100.

Additionally, water which has reached the lower end of the face 104 of the composite plate-like tile 100 partially travels toward the back 105 (FIG. 13) along the lower surface 109 from the end part of the face 104 side of the lower surface 109 (FIG. 13), but falls down to the upper surface 111 of the composite plate-like tile 100 just below due to the prevention of its travel when reaching a groove 135 for feeding water. Thus, the groove 135 for feeding water prevents water from reaching each of the back 105 of the composite plate-like tiles 100 along the lower surface 109 and contributes to the effective feeding of water to the face of the lower composite plate-like tile 100 from the upper composite plate-like tile 100.

Moreover, the wall surface structure fitted to the outer wall including the composite plate-like tiles 100, composite tiles 50, 28, and 28s or the like has such cooling effects that moisture absorbed into the porous ceramic bodies 116 at the time of rain fall evaporates at the time of clear weather and cools the wall due to this heat of evaporation.

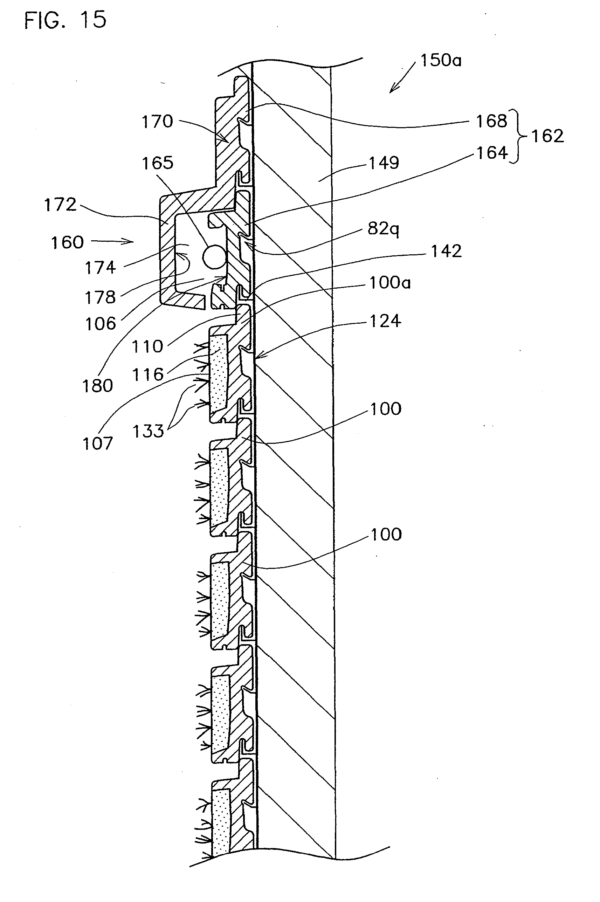

FIG. 15 shows one example of another wall surface structure of the present invention. In a wall surface structure 150a with a water-supply means shown in FIG. 15, a water-supply means 160 is placed further upper part of the top composite plate-like tile 100a on the row of the composite tile 100a locked to the outer wall 149 via the locking plate 124 on the similar disposition as in FIG. 14.

The water-supply means 160 comprises a surrounding tool 162 and a water-supply pipe 165 surrounded by the surrounding tool 162 and horizontally placed along the locking plate 124. The surrounding tool 162 comprises a holding tile 164 shaped in similar to the part of the pottery 118 of the composite plate-like tile 100 and a covering tile 168 to cover the holding tile 164. Both of them are composed of pottery. The holding tile 164 is engaged with the locking plate 124 via a locking part 82q in the same aspect as the composite plate-like tile 100 and is combined by the insertion of the ridge 110 of the composite plate-like tile 100a in a recess area 142 of the holding tile 164.

The covering tile 168 comprises an engaging part 170 engaged with the locking plate 124 in the same manner as in the composite plate-like tile 100 and a cover 172 connected to the engaging part 170 to cover the holding tile 164. The engaging part 170 is virtually similar to the composite plate-like tile 100 in its outline. The cover 172 is composed of a long member in a grooved pattern in cross section and covers the water-supply pipe 165, where the water-supply pipe 165 is housed in a long-shaped spacing 174 formed by the enclosure of an internal side 178 of the cover 172 and an inner surface 180 of the groove 106 in the holding tile 164.

A hole array along the longitudinal direction which is not shown in the figure is formed in the water-supply pipe 165, wherein water is supplied and is discharged from the hole array to be supplied to the further lower composite plate-like tile 100 through the long-shaped spacing 174 after passing the top composite plate-like tile 100a.

In a wall surface structure 150a with a water-supply means, feeding water to the plants 133 to grow and to cool the wall surface by the above-mentioned evaporating effects of the composite plate-like tiles 100 is aggressively carried out without the need for rain water and man power. Further, the wall surface structure 150a with a water-supply means supplies water from the water-supply pipe 165 with the porous ceramic bodies 116 of a number of composite plate-like tiles 100 and has effects of reducing a cooling load by evenly absorbing water to evaporate absorbed water when it is clear and cooling the wall by the heat of evaporation, which leads to the lowering the room temperature of the building even when no plants grow on the wall as well as the effects of automating water supply to the grown plants 133.

Furthermore, the water-supply pipe 165 is covered with a cover made of the same material to that of the composite tiles, so that the water-supply pipe 165 matches outer wall appearance and has no damage on its appearance. In addition, the installation cost is extremely low because this cover can be attached by utilizing the locking plate 124 for composite tiles without separate installation.

In the wall surface structure 150 or the wall surface structure 150a with a water-supply means, the plants 133, such as sedum, commelina communis, Lippia nodiflora or moss are planted (grow) on the respective exposed surfaces 107 of the porous ceramic bodies 116. Alternatively, creepers, such as ivy can grow. The plants 133 cut off direct sunlight and contribute to a reduction in the cooling energy of the building because of its water evaporation as well as the improvement of the appearance of the outer wall.

The porous ceramic body preferably contains alkaline components, such as magnesium oxide, calcium oxide or the like at the weight % of 1 to 10. This enables the porous ceramics to be alkaline to obtain a porous ceramic body suitable for growing sedum and commelina communis. For this, clay which constitutes a body for firing and a composite body for firing before firing preferably contains alkaline components, such as magnesium oxide and calcium oxide at the rate of 1 to 10 weight %.

The porous ceramic body 116 preferably refuels nourishment as well as water supply to plants grow because organic material retains in a rubbish state. It is difficult for plants to separate from the ceramic body 116 by an external force, such as strong wind because roots are retained in a matrix structure having holes. When using creepers, this matrix structure is a firm foothold to plants, so that it enables plants to surely creep.

Multiple holes of the porous ceramic body 116 can contain a fertilizer, such as a liquid fertilizer, and soil by previous or periodic impregnation or pouring or pushing. This further promotes growth of the plants.

Further, even in the wall surface structure 150 or the wall surface structure 150a with a water-supply means, the composite plate-like tiles 100 are attachable or removable, so that they can be exchanged for tiles in favorite color, the composite tiles having seriously damaged plants or the tiles partially having a difference in the degree of growth of the plants due to amount of sunshine or the like can be exchanged or replaced. It is easy to remove dirty composite tiles to clean and reattach them. Furthermore, the plants can be previously put down on the ground and stay before fixing them to the outer wall and then can be fixed to the outer wall.

Further another embodiment of the wall surface structure according to the present invention will now be described using figures. In the wall surface structure 150c, composite structured composite plate-like tiles 100 shown in FIG. 13 are used. A side corresponding to the tile face of the upper surface 111 (upper side) on each composite plate-like tile 100 is preferably an slope 117 descending and slanting slope toward the tile face.

The porous ceramic body 116 is preferably generated by firing to be bonded to the wall of the pottery 118 in view of stability of structure, but a plate-like material composed of a porous body previously prepared may be fitted into a groove for housing.

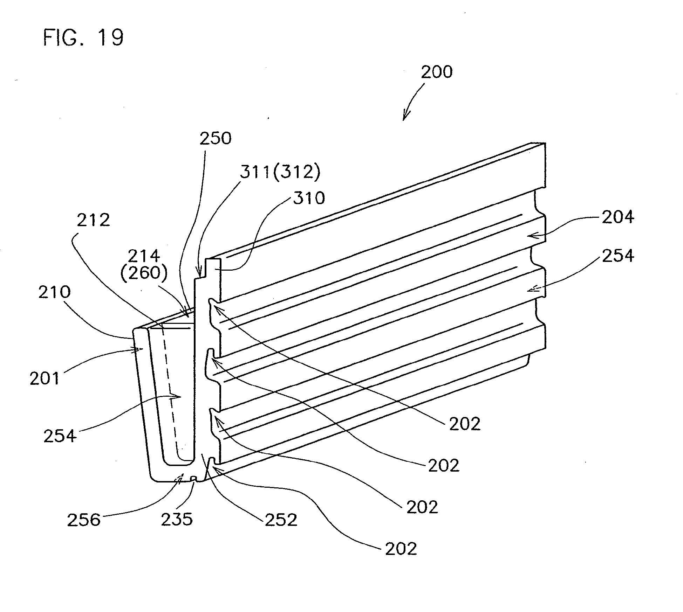

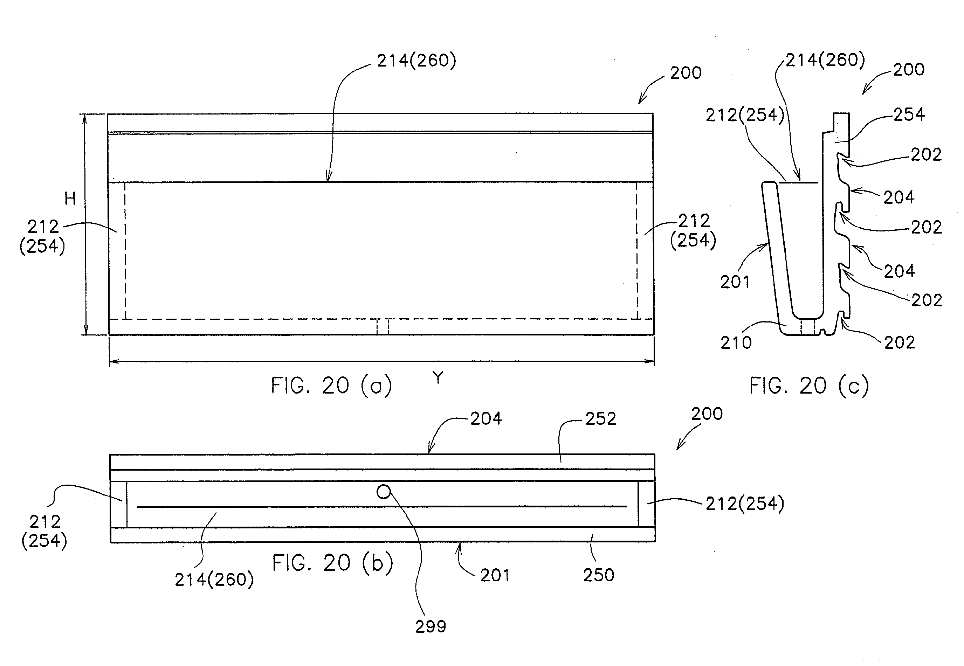

A pot-shaped tile 200 shown in FIGs. 19 and 20 is used in the present invention. The pot-shaped tile 200 has a face side wall 250 opened upward and faced to external space faced each other to a base wall surface to be fixed to each other, a back side-wall 252, and a pair of horizontal side walls 254 faced to the base wall surface, and a bottom wall 256 to form these side walls. The pot-shaped tile 200 comprises a cross-sectional U-shaped, V-shaped or a substantially groove-type cylindrical member 210 and a sealing member 212 to correspond to an end of the cylinder and at least partially seal both openings positioned on the side of the pot-shaped tile 200. A missing part 214 constitutes an upper opening 260. The cylindrical member 210 and the sealing member 212 may be molded in one piece.

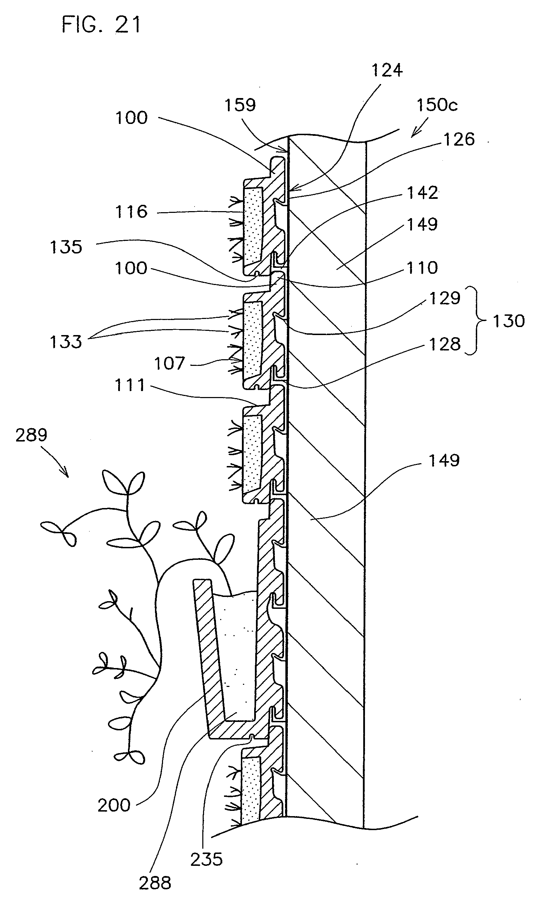

The pot-shaped tile 200 is faced to the external space faced each other to the base wall to be fixed to a face 201, wherein a back 204 is arranged facing to its base wall and a catching part 202 to engage with a locking support 130 (FIG. 21) is provided on the back 204. The shape of the catching part 202 is preferably similar to that of the catching part 82p of the composite plate-like tile 100 (FIG. 1). Further, a ridge 310 projecting upward and extending in a row direction is preferably formed on the rear side of an upper surface 311 of a back-side side wall 252. The upper surface 311 is preferably a slope 312 for descending and slanting toward the front.

A transverse groove 235 extending laterally is preferably formed on the outer surface of the bottom wall 256. Further, a clearance for drain may be provided on a joint between the cylindrical member 210 and the sealing member 212. A drain hole 299 may be formed on the bottom wall 256 in the pot-shaped tile 200.

The ridge 310, the slope 312, and the transverse groove 235 respectively have functions similar to those of the ridge 210, the slope 117, and the transverse groove 135 in the composite plate-like tile 100 when the pot-shaped tile 200 is fitted to the base wall surface.

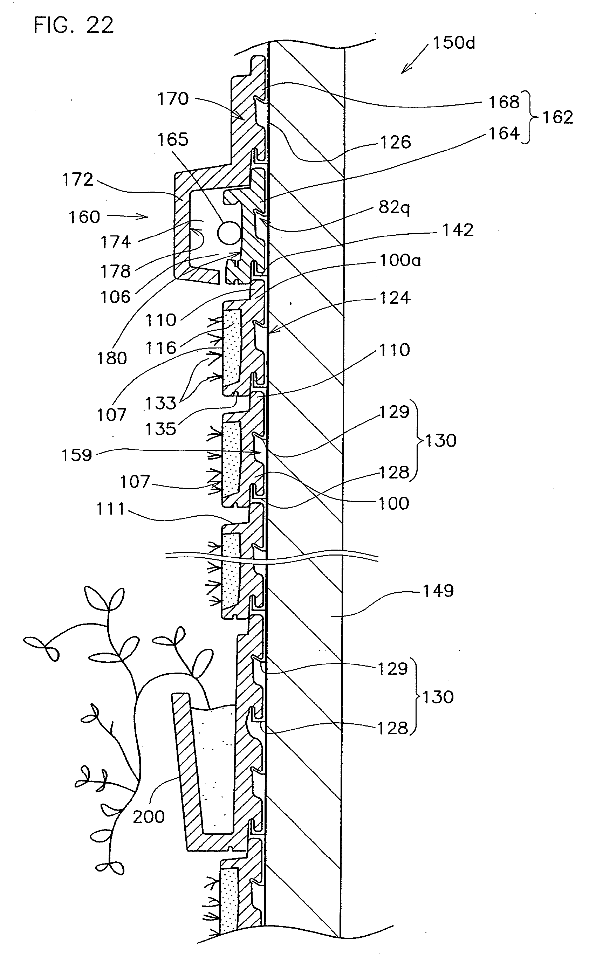

The pot-shaped tile 200 has a certain width and height. The shape of the pot-shaped tile 200 is not limited to the shape shown in FIG. 22, if only the tile has a catching part 202 on its back. The material of the pot-shaped tile 200 is preferably pottery, but it may be a resin or a metal, so that the material is not limited. The catching part 202 is preferably combined with the pot-shaped tile body, such as the cylindrical member 210 in view of production costs, but it may be a hook-shaped member connected to the pot-shaped tile body. The material of the hook-shaped member is not particularly limited, for example, it may be either of pottery, a metal, or a resin.

FIG. 21 shows an aspect of the wall surface structure 150c according to the present invention wherein the composite plate-like tiles 100 and the pot-shaped tile 200 are fitted to a base wall surface 159 of the outer wall 149. The composite plate-like tiles 100 and the pot-shaped tile 200 are engaged with the outer wall 149 through the locking plate 124 bonded to the outer wall 149. The catching parts 202 of the pot-shaped tile 200 are engaged with the outer wall 149 in the same manner as in the catching parts 82p of the composite plate-like tiles 100. The alignment between the ridge 310 of the pot-shaped tile 200 and the lower end of the respective composite plate-like tiles 100 arranged just above the pot-shaped tile 200 is similar to that between the ridges 110 of the lower side of the composite plate-like tiles 100 in the plate-like tile arranged up and down, and the lower end of the upper sided composite plate-like tile 100, so that a sense of unity between the composite plate-like tiles 100 and the pot-shaped tile 200 is obtained, which leads to a beautiful wall surface. In addition, the ridge 310 of the pot-shaped tile 200 serves the similar function to the ridge 110 of the respective composite plate-like tiles 100. The ridge 310 and the slope 312 have respective functions similar to the ridge 210 and the slope 117 in the composite plate-like tile 100.

The composite tiles 100 and the pot-shaped tile 200 are engaged with the outer wall 149 through the locking plate 124 affixed to the outer wall 149. The locking plate 124 comprises a substrate 126 and a plurality of lengthy locking supports 130 arranged up and down horizontally in the longitudinal direction on the surface of the substrate 126. A locking support 130 comprises a lower supporting member 128 and an upper supporting member 129 arranged upwardly of the lower supporting member 128. The lower supporting member 128 is composed of a long member in the shape of L in section mutually connected at one end along the respective longitudinal direction by intersecting each surface of one plain band-type plate and another plain band-type plate, wherein the surface of one plain band-type plate is arranged parallel to the substrate 126 and then other end along the longitudinal direction is fixed to the substrate 126. The upper supporting member 129 is composed of another long member in such a shape that a long plate is folded at a crease along the longitudinal direction into a sectional dogleg shape, and is fixed to the substrate 126 at an end along the longitudinal direction by directing diagonally to its surface upward.

The composite plate-like tile 100 is engaged with the locking support 130. More particularly, the lower supporting member 128 is engaged with the locking groove 114 (FIG. 1) and the upper supporting member 129 is engaged with the catching groove 115 (FIG. 1).

Further, the composite plate-like tiles 100 are arranged on one surface from side to side and up and down along the wall surface (base wall surface 159)of the outer wall 149 and the adjacent up and down composite plate-like tiles 100 are combined by inserting the recess area 142 of the upward composite plate-like tile 100 into the ridge 110 of the downward composite plate-like tile 100. The catching part 82p (FIG. 1) to be fitted to the worked surface comprises the locking groove 114 and the catching groove 115. It is preferable in view of production costs that the catching part 82p is formed together with a plate-like tile, but may be a hook-shaped member connected to the plate-like tile body. The material of the hook-shaped member is not particularly limited, and for example, it may be either of pottery, a metal, or a resin.

The shape in cross section of the lower supporting member 128 and the upper supporting member 129 are not limited to a L-shape or a dogleg-shape, if only the shape is engaged with the catching part 82p.

The pot-shaped tile 200 is fitted by engaging with the locking support 130 after the removal of a part of plurality of composite plate-like tiles 100 fitted in a planar state.

The pot-shaped tile 200 is filled with molding 288 to grow the plants 289.

The wall surface structure 150c of the present invention realizes an outside superior thermal insulating structure of the building by the effective disposition of the porous ceramic bodies 116 having superior thermal insulation. Further, the wall surface structure 150c is suitable for firmly rooting the plants 133 to the outer surface of the building because the porous ceramic bodies 116 are exposed to the surface.

Furthermore, in the wall surface structure 150c, water, such as rain water humidified and saturated by being attached to the upward composite plate-like tiles 100 falls from the lower end of the face 104 of the upward composite plate-like tiles 100 to the part of the face side of the upper surface 111 of the composite plate-like tile 100 just below and reaches the upper end of the face 104 (FIG. 1) of the composite plate-like tiles 100 from the part where water falls and then spreads all over the up and down directions of the face 104 (FIG. 1) of the composite plate-like tile 100 just below. The travel of water is successively realized on the downward composite plate-like tile 100 from the top stage of the composite plate-like tile 100 to equally spread each of the face of the whole top and down of the composite plate-like tiles 100.

Additionally, water which has reached the lower end of the face 104 of the respective composite plate-like tiles 100 partially travels toward the back 105 (FIG. 1) along the lower surface 109 from the edge of the face 104 side of the lower surface 109 (FIG. 1), but falls down to the upper surface 111 of the composite plate-like tile 100 just below due to the prevention of its travel when reaching the transverse groove 135. Thus, the transverse groove 135 prevents water from reaching each of the back 105 of the composite plate-like tiles 100 along the lower surface 109 and contributes to the effective feeding of water to the face of the lower composite plate-like tile 100 from the upper composite plate-like tile 100. Moreover, water which has fallen down to the upper surface 111 effectively reaches the porous ceramic body 116 on the face of the tile when the upper surface 111 is a slope descending and slanting toward the plate-like tile face. This leads to equal spread of water to the face of the whole top and down of the composite plate-like tiles 100. In addition, the ridge 110 effectively prevents water fallen down to the upper surface 111 from reaching each of the back of the composite plate-like tiles 100.

Moreover, the wall surface structure 150c has such cooling effects that moisture absorbed into the porous ceramic bodies 116 at the time of rain fall evaporates at the time of clear weather and cools the wall due to this heat of evaporation, as well as external thermal insulation and ornament effects.

As is shown in FIG. 22, the wall surface structure 150c may have a water-supply means 160. In the wall surface structure 150d shown in FIG. 22, the water-supply means 160 is placed further upper part of the top composite plate-like tile 100a on the tile row locked to the outer wall 149 via the locking plate 124 on the similar disposition as in FIG. 21.

The water-supply means 160 comprises a surrounding tool 162 and a water-supply pipe 165 surrounded by the surrounding tool 162 and horizontally placed along the locking plate 124. The surrounding tool 162 comprises a holding tile 164 shaped in similar to the part of the pottery 118 of the composite plate-like tile 100 and a covering tile 168 to cover the holding tile 164. Both of them are composed of pottery. The holding tile 164 is engaged with the locking plate 124 via a locking part 82q in the same aspect as the composite plate-like tile 100 and is combined by the insertion of the ridge 110 of the composite plate-like tile 100a in a recess area 142 of the holding tile 164.

The covering tile 168 comprises an engaging part 170 engaged with the locking plate 124 in the same manner as in the composite plate-like tile 100 and a cover 172 connected to the engaging part 170 to cover the holding tile 164. The engaging part 170 is virtually similar to the composite plate-like tile 100 in its outline. The cover 172 is composed of a long member in a groove pattern in cross section and covers the water-supply pipe 165, where the water-supply pipe 165 is housed in a long-shaped spacing 174 formed by the enclosure of an internal side 178 of the cover 172 and an inner surface 180 of the groove 106 in the holding tile 164.

A hole array along the longitudinal direction which is not shown in the figure is formed in the water-supply pipe 165, wherein water is supplied and is discharged from the hole array to be supplied to further lower composite plate-like tile 100 through the long-shaped spacing 174 after passing the top composite plate-like tile 100a.

In the wall surface structure 150d, feeding water to the plants 133 to grow and to cool the wall surface by the above-mentioned evaporating effects of the composite plate-like tiles 100 is aggressively carried out without the need for rain water and man power. Further, the wall surface structure 150d supplies water from the water-supply pipe 165 with the porous ceramic bodies 116 of a number of composite plate-like tiles 100 and has effects of reducing a cooling load by evenly absorbing water to evaporate absorbed water when it is clear and cooling the wall by the heat of evaporation, which leads to the lowering the room temperature of the building even when no plants grow on the wall as well as the effects of automating water supply of the grown plants 133.

Furthermore, the water-supply pipe 165 is covered with a cover made of the same material to that of the plate-like tiles, so that the water-supply pipe 165 matches outer wall appearance and has no damage on its appearance. In addition, the installation cost is extremely low because this cover can be mounted by utilizing the locking plate 124 for the plate-like tiles without separate installation.

In the wall surface structure 150 or the wall surface structure 150d, the plants 133, such as sedum, commelina communis, Lippia Nodiflora or moss are planted (grow) on the respective exposed surfaces 107 of the porous ceramic bodies 116. Alternatively, creepers, such as ivy can grow. The plants 133 cut off direct sunlight and contribute to a reduction in the cooling energy of the building because of its water evaporation as well as the improvement of the appearance of the outer wall.

The porous ceramic body preferably contains alkaline components, such as magnesium oxide, calcium oxide at the weight % of 1 to 10. This enables the porous ceramics to be alkaline to obtain a porous ceramic body suitable for growing sedum and commelina communis. For this, clay which constitutes a body for firing and a composite body for firing before firing preferably contains alkaline components, such as magnesium oxide and calcium oxide at the rate of 1 to 10 weight % at the time of firing the base material for plate-like tiles.

The porous ceramic body 116 preferably refuels nourishment as well as water supply to plants grow because organic material retains in a rubbish state. It is difficult for plants to separate from the ceramic body 116 by an external force, such as strong wind because roots are retained in a matrix structure having holes. When using creepers, this matrix structure is a firm foothold to plants, so that it enables plants to surely creep.

Multiple holes of the porous ceramic body 116 can contain a fertilizer, such as a liquid fertilizer, and soil by previous or periodic impregnation or pouring or pushing. This further promotes growth of the plants. A fertilizer, such as a liquid fertilizer, may be mixed with water fed by the water-supply means 160.

Further, even in the wall surface structure 150c or the wall surface structure 150d, the composite plate-like tiles 100 are attachable or removable, so that they can be exchanged for tiles in favorite color, the plate-like tiles having seriously damaged plants or the tiles partially having a difference in the degree of growth of the plants due to amount of sunshine or the like can be exchanged or replaced. It is easy to remove the dirty composite tiles to clean and reattach the composite tiles. Furthermore, the plants can be previously put down on the ground and stay before fixing it to the outer wall and then can be fixed to the outer wall.

The integral multiple of the width Y of the pot-shaped tile 200 is preferably close to an integral multiple of the width (long width) WL of the composite plate-like tile 100. This enables to fit the pot-shaped tile 200 into the place virtually without intervals, where at least one composite plate-like tile 100 has been removed from the matrix of the composite plate-like tiles 100 lattice-like arranged, so that a sense of unity of the composite plate-like tiles 100 and the pot-shaped tile 200 is obtained to form a further beautiful wall surface. Ordinarily, it is preferable that Y and WL are virtually the same and H is about two times as WS. Furthermore, being virtually integral multiple means an allowance for fitting space or spacing corresponding to a joint spacing among the plate-like tiles.

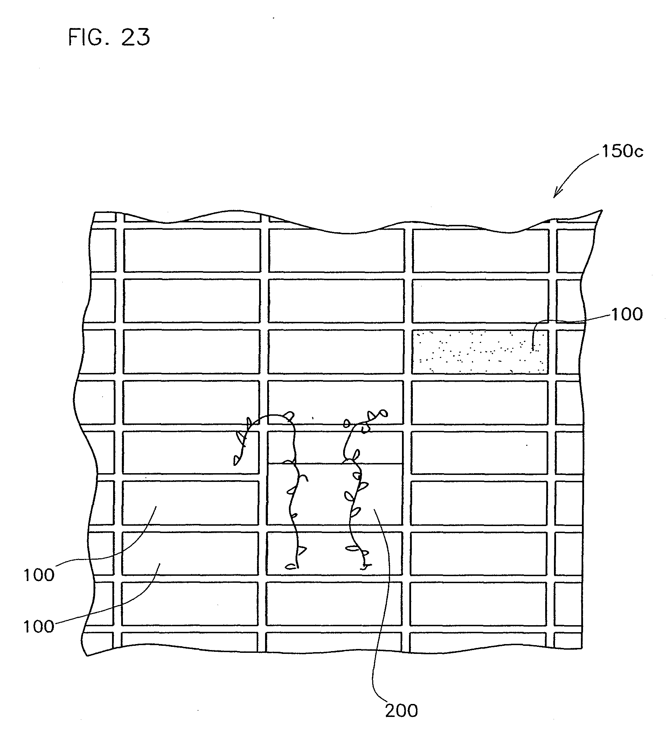

FIG. 23 shows a plan schematic view of the wall surface structure 150. The wall surface is beautified by arranging a pot-shaped tile 200 in a matrix of each composite plate-like tile 100 at intervals.

The arranged pot-shaped tile 200 is easily changeable from time to time according to the state of plants or aging and season. For example, the pot-shaped tile 200 in which flowers and flowering trees are planted can be prepared and changed accordingly. Further, the flowers and the flowering trees planted in the pot-shaped tile 200 can be changed according to season.

Water fed by a water-supply means 160 is automatically and almost equally provided also to the pot-shaped tile 200 through the composite plate-like tiles 100 when the surface wall structure 150c includes the water-supply means 160, resulting in good planting.

A portion of the porous ceramic body 116 in the composite plate-like tile 100 used for the wall surface structure 150 or the wall surface structure 150a or the wall surface structure 150c or the wall surface structure 150d preferably contains 1 to 5% of water absorption (JIS (JIS R2205) in growing well and maintaining the outer wall 149. More specifically, the portion of the porous ceramic body 116 is either stoneware property or has a property similar to stoneware property. As the water absorption increases beyond this range, the bigger the degree of water seeps from the back of the composite plate-like tiles 100, which may cause contamination and aging of the outer wall 149. As the water absorption decreases beyond this range, the drainage of the porous ceramic body 116 is blocked, which results in the impossibility of obtaining the best environment for good growth and rooting.

In the configuration of FIG. 23, plate-like tiles having a surface morphology like ordinary tiles in the same shape as the composite plate-like tiles 100 consisted of pottery may be used as a replacement of the composite plate-like tiles 100. In this case, although appearance effects produced by growing plants on the tile surface, such as the composite plate-like tiles 100 and cooling effects produced by water absorption of the porous ceramic bodies and evaporation of water from the surface are not so obvious, beautification effects produced by the placement of the pot-shaped tile 200 on the wall surface and healing effects produced by the appearance and smell of plants can be obtained. Further, the color of the composite plate-like tiles 100 on the back and the mosaic patterns of the tiles are changeable according to the kind and placement of plants as appropriate.

In the wall surface structure according to the present invention, the application of the water-supply means 160 enables fluctuation pattern effects of the wall surface produced by even water flow to the plate-like tile surfaces, even if plants are not put on the plate-like tile surfaces. Further, it becomes possible to automatically feed water to plants grow on the pot-shaped tile 200 by placing the pot-shaped tile 200.

Further, in the wall surface structure, beautification effects of the wall surface produced by putting cut flowers and ornamental plants on the pot-shaped tile 200 in replacement of garden plants and healing effects from the appearance and smell of plants can be obtained. Furthermore, the application of the water-supply means 160 enables automatic water feeding to the plants growing on the pot-shaped tile 200.

Moreover, in the wall surface structure according to the present invention, beautification effects of the wall surface produced by planting artificial flowers or ornaments or aroma on the pot-shaped tile 200 in replacement for garden plants and healing effects from the smell of plants can be obtained.

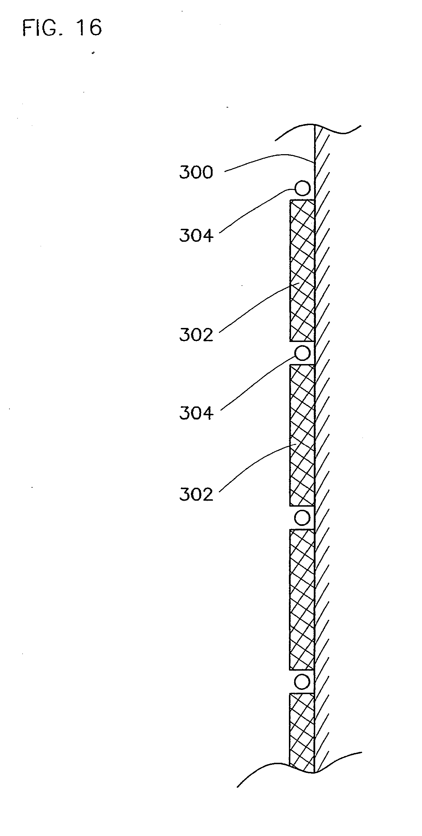

As is shown in FIG. 16, in a conventional method of planting plants on the outer wall, fiber mats 302 made of a hemp palm or the like have been vertically and horizontally arranged directly on an outer wall 300 as a vegetation floor to be adhered with an adhesive. In this method, the fiber mats 302 get dirty or have difficulty in exchanging when the plants get die. Further, the appearance of the wall is spoiled due to no coverage of pipes 304. Complicated construction is needed to cover the pipes 304.

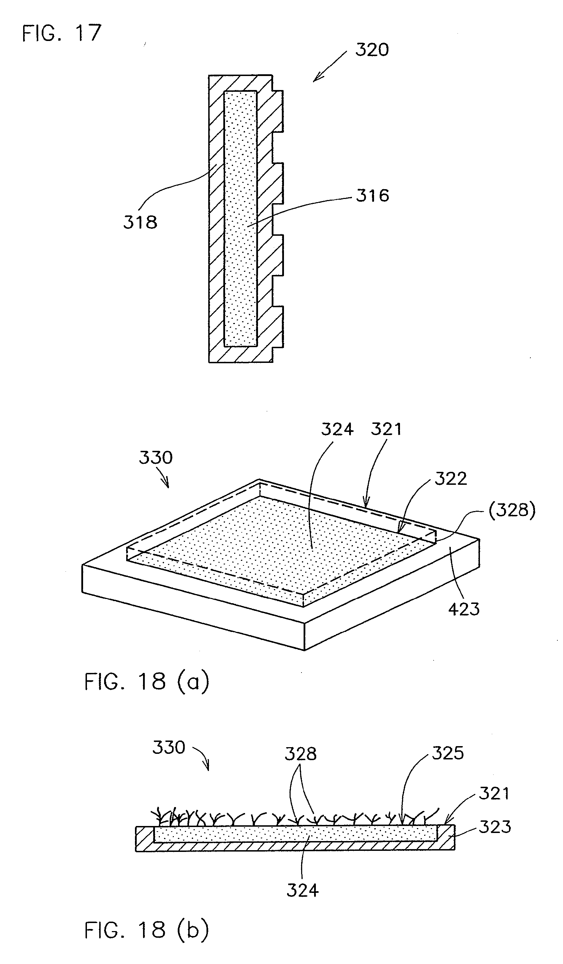

Furthermore, conventionally, a typical example of a tile to improve thermal insulation wherein a porous ceramic body 316 has a structure completely covered with pottery 318 is a tile 320 as shown in FIG. 17, but this type of tile does not have so excellent water absorption effect and distillation effect as the composite tile of the present invention because the plane of the porous ceramic body 316 is not exposed.

In still another embodiment of the present invention, a typical example is a base 320 for planting using a composite ceramic structure shown in FIG. 18. The base 321 for planting comprises: a plate 323 for pottery where a groove-shape or a recess-like lost part 322 is formed on its upper surface; and a porous ceramic body 324 engaged with the lost part 322 or connected with the inner wall of the lost part 322, which is in a thick-plate shape as a whole.

In the upper surface of the base 320 for planting, the surface of the porous ceramic body 316 is exposed except at least a part of its edges, which becomes a porous ceramic exposed surface 325. Plants 328, such as sedum, commelina communis, and Lippa Nodiflora or moss grow on the porous ceramic exposed surface 325. The base 321 for planting of the present invention is extremely preferable for staying and growing these plants because of water retention of the porous ceramic body 324, easy rooting, and good retention of the root.

The plants 228 previously grow in the base 321 for planting to make a plant ceramic compound 330. Carrying the plant ceramic compound 330 to the place to be arranged in a plane state allows the surface arranged to be covered with plants.

The plant ceramic compound 330 contributes to the roof gardening and the reduction in cooling load of the building by covering a plurality of the plant ceramic compounds 330 on the roof floor of the building. This covering work does not need manpower and is easy. Further, it is easy to change the place of covering. Moreover, it is easy to exchange a part of the covered plant ceramic compounds that is dead or dirty.

The plant ceramic compounds 330 contribute to outdoor ground gardening and the reduction of heat-island phenomenon by being covered to an outdoor ground, such as a park. This covering work does not need manpower and is easy. Further, it is easy to exchange a part of the covered plant ceramic compounds that is dead or dirty.

### (Example 1)

Clay minerals were formed in the shape of a flowerpot as shown in FIG. 3 to obtain a clayware flowerpot by performing biscuit firing at 700°C. The outer measurement of this clayware flowerpot was 60 cm in length, width, and height respectively. The inner measurement of this clayware flowerpot was 55 cm in length, width, and height respectively. On the other hand, clay was obtained by mixing clay minerals with SiC. The mixture ratio of SiC was 5 weight % with respect to the dry weight of the clay minerals. The clayware flowerpot was filled with this clay. This clay was filled on the top surface of the clayware flowerpot virtually flat up to 5 cm in height from its upper edge. The clayware flowerpot filled with clay was fired at 1,000°C for 24 hours to obtain a composite flowerpot filled with a porous ceramic body. The roof of the 10 storied building was covered with a number of these composite flowerpots to grow plants respectively. As a result, air-conditioning energy costs were reduced. Further, clean environment was maintained without being dirty by the soil in the vicinity of the installation, even after more than a year. Rainwater covered water, so that it was almost maintenance-free.

### (Example 2)

A composite flowerpot filled with a porous ceramic body was obtained in the same manner as in Example 1 except for the use of the mixture of 10 capacity % of beads (average diameter 100 µm) made of phenol resin with clay minerals as molding for filling. The roof of the 10 storied building was covered with a number of composite flowerpots to grow plants in each composite flowerpot. As a result, air-conditioning energy costs were reduced. Further, clean environment was maintained without being dirty by the soil in the vicinity of the installation, even after more than a year. Rainwater covered water, so that it was almost maintenance-free.

### (Example 3)

A urethane foam was used as an evanescent porous body. Clay comprised of clay minerals was changed into mud to be impregnated into this urethane foam to obtain a composite body for firing which comprises clay and the urethane foam. The attached weight of mud was 0.3 g with respect to the urethane foam of 1 cm × 1 cm × 1 cm. The shape of the urethane foam is the same as the outer shape of the porous ceramic body in the flowerpot obtained in Example 1. The composite body for firing was engaged with a clayware flowerpot used similar to the one used in Example 1 to obtain a composite flowerpot by firing the composite body for firing and the clayware flowerpot in the same manner as in Example 1. The roof of the 10 storied building was covered with a number of the composite flowerpots to grow sedum for each pot. As a result, air-conditioning energy costs were reduced. Further, clean environment was maintained without being dirty by the soil in the vicinity of the installation, even after more than a year. Rainwater covered water, so that it was almost maintenance-free.

### (Example 4)

A rigid urethane resin having a porosity of 50% was cut out in a block shape having each 30 cm-side to obtain a porous body. This porous body was painted on its other five surfaces with oil paint except for one surface as a top surface to form a paint film with a thickness of about 0.5 mm and a composite flowerpot was obtained. The roof of the 10 storied building was covered with a number of the composite flowerpots to grow sedum for each pot. As a result, air-conditioning energy costs were reduced. Further, clean environment was maintained without being dirty by the soil in the vicinity of the installation, even after a year. Rainwater covered water, so that it was almost maintenance-free.

### (Example 5)

100 weight parts of early-strength cement, 25 weight parts of Fuyo Light produced by Fuyo Pearlite Co., Ltd., 25 weight parts of G Light produced by Sunlight Co., Ltd., 5 weight parts of Marialim as a water reducing agent produced by NOF Corporation, and 2 weigh parts of Cellufoam L-50 as a bubble agent produced by Cellufoam Engineering Laboratory Co., Ltd. were mixed to prepare slurry and then slurry including bubbles was obtained with a bubble generator (Celluace produced by Cellufoam Engineering Laboratory Co., Ltd.). A composite flowerpot was obtained by injecting this slurry including bubbles into a flowerpot to be cured. The specific gravity of cured porous concrete was 0.75. This flowerpot was obtained by firing a clayware flowerpot used in Example 1 at 1,000°C for 25 hours.

### (Example 6)

Clay minerals were formed in the shape similar to plate-like pottery 18g as shown in FIG. 8 to obtain a plate-like clayware body by firing. The thickness of the clayware body was 4 mm, and its planar shape was a square having a side of 5 cm. Grooves 55 were provided on the back side of the clayware body. On the other hand, SiC was mixed with clay minerals to obtain clay. The mixture rate of SiC was 4 weight % with respect to dry weight of clay minerals. Clay was formed in the shape similar to a plate-like porous ceramic body 16g as shown in FIG. 8 to be overlapped on the face of the plate-like clayware body. This overlay was fired at 1,100°C for 24 hours to obtain a composite tile on which a porous ceramic body was overlapped.

### (Example 7)

Using a clay base made in Shigaraki, a molding base in the shape similar to tubular pottery 20 shown in FIG. 12 was made with an extruding mold. The width between the direction of the length and the orthogonal direction of this molding base was 4 × 6 cm. The thickness of the tube wall was 5 mm. Bubbling clay caused by firing was injected into a hollow portion of this molding base. This clay was obtained by mixing 10 weight % of SiC with respect to its dry weight with the clay base made in Shigaraki. 30 capacity % of this clay was injected with respect to the capacity of the hollow portion of the molding base. And then the molding base in which this clay was injected was fired at 1,100°C for 24 hours to obtain pillar-like pottery 24a. The pillar-like pottery 24a was divided into two by cutting it in a longitudinal direction of and along a parallel surface to obtain composite tiles 28a by cutting the divided pottery 24a into each length of 25 cm. Porous ceramics 25 after bubbling were thoroughly bonded to the pottery 20a after cutting at the boundary surface in a closely contact with each other by sintering and a good joint condition was obtained. In the composite tile 28a, a dovetail of ribbed projections arranged on the outer wall of the building was engaged with a groove 56 to obtain an outer wall surface of the building wherein a surface of the porous ceramics 25 (cut area 29) was exposed to the outer surface. This outer wall surface became a good base for sedum planted. Further, the wall of the building having the composite tile 28a was excellent in thermal insulation.

While the embodiments of the composite ceramic structure, the production method thereof, and the composite flowerpot and the composite tile made of the ceramic structure according to the present invention have thus been described so far, it should be understood that various improvements, modifications, and changes can be made to the embodiments of the basis of knowledge of those skilled in the art without departing from the scope of the present invention.

### INDUSTRIAL APPLICABILITY

A wall surface structure of the present invention is applicable not only to the outer wall of a building but also to ornaments for the indoor wall surface and for controlling temperature. Further, the wall surface structure is preferably applicable to independent outdoor ornaments for a plate-like monument.

### BRIEF DESCRIPTION OF THE DRAWINGS

FIG. 1 is a cross-sectional view showing a configuration of a composite precursor used for manufacturing a composite ceramic structure of the present invention.
FIG. 2 is a cross-sectional view showing a configuration of a composite ceramic structure of the present invention.
FIG. 3 is a cross-sectional view showing one example of a configuration of a composite flowerpot of the present invention.
FIGs. 4(a) and 4(b) are views respectively illustrating one example of an operation to plant a seedling into a composite flowerpot of the present invention. FIGs. 4(a) and 4(b) respectively have a different kind of seedling.
FIG. 5 illustrates one example of another embodiment of the composite flowerpot of the present invention.
FIG. 6 illustrates one example of still another embodiment of the composite flowerpot of the present invention.
FIG. 7 is an upper view showing an arrangement wherein composite flowerpots of the present invention are placed on the roof of a building.
FIG. 8 is a cross-sectional view showing one example of a configuration of a composite tile of the present invention.
FIG. 9 is a schematic view in section illustrating another embodiment of the composite tile and its production process of the present invention.
FIG. 10 is a schematic view in section illustrating still another embodiment of the composite tile and its production process of the present invention.
FIGs. 11(a) and 11(b) are respectively a schematic view in section showing a state in which the composite tile according to the present invention shown in FIG. 10 is fitted to a worked wall surface.
FIG. 12 is a schematic view in section illustrating a further embodiment of the composite tile and its production process of the present invention.
FIG. 13 is a perspective cross-sectional view showing one example of a still further embodiment of the composite tile of the present invention.
FIG. 14 is a schematic view in section showing an embodiment of a wall surface structure of the present invention wherein the composite tiles of the present invention are fitted to an outer wall of a building.
FIG. 15 is a schematic view in section showing another example of the wall surface structure of the present invention.
FIG. 16 is a schematic view in section showing a conventional wall surface structure.
FIG. 17 is a schematic view in section showing a conventional thermal insulating tile.
FIGs. 18(a) and 18(b) respectively show a structure of a base for planting of the present invention using a composite ceramic structure of the present invention. FIG. 18(a) is a perspective schematic view. FIG. 18(b) is a schematic view in section.
FIG. 19 is a perspective view showing one example of an embodiment of a pot-shaped tile used for the wall surface structure of the present invention.
FIG. 20(a) is a front view of the pot-shaped tile shown in FIG. 19. FIG. 20(b) is a plan view of the pot-shaped tile shown in FIG. 19. FIG. 20(c) is a side view of the pot-shaped tile shown in FIG. 19.
FIG. 21 is a cross-sectional view illustrating one example of an embodiment of the wall surface structure of the present invention using the plate-like tile shown in FIG. 13 and the pot-shaped tile shown in FIG. 19.
FIG. 22 is a cross-sectional view illustrating one example of another embodiment of the wall surface structure of the present invention using the plate-like tile shown in FIG. 13 and the pot-shaped tile shown in FIG. 19.
FIG. 23 is a front cross-sectional view of the wall surface structure shown in FIG. 21.

### DESCRIPTION OF THE SYMBOLS

- 2:: Clayware body
- 4, 4a, 22:: Body for firing
- 6:: Spliced surface
- 10, 10a, 10b:: Composite precursor
- 12, 12a, 12b, 33, 33s:: Composite ceramic structure
- 16, 16a, 16b, 16d, 16g:: Porous ceramic body
- 17:: Boundary
- 18, 18g, 20:: Pottery
- 30, 30a, 30b:: Composite flowerpot
- 32:: Pot-shaped pottery
- 34:: Boundary surface
- 28, 28a, 28s, 50:: Composite tile
- 56:: Dovetail groove
- 100:: Composite plate-like tile
- 106:: Groove
- 110:: Ridge
- 111:: Upper surface
- 112:: Groove for housing
- 114:: Locking groove
- 115:: Catching groove
- 116:: Ceramics porous body
- 117:: Slope
- 118:: Pottery
- 130:: Locking support
- 133:: Plant
- 135, 235:: Transverse groove
- 150, 150a:: Wall surface structure
- 159:: Base wall surface
- 82p:: Catching part
- 82q:: Locking part
- 159:: Base wall surface
- 150, 150a, 150c, 150d:: Wall surface structure
- 160:: Water-supply means
- 162:: Surrounding tool
- 164:: Holding tile
- 165:: Water-supply pipe
- 168:: Covering tile
- 170:: Engaging part
- 172:: Cover
- 174:: Long-shaped spacing

## Claims

1. A composite ceramic structure composed by bonding pottery and a porous ceramic body by sintering.

2. A composite ceramic structure composed by bonding pottery and a porous concrete structure by the curing of a precursor of the porous concrete structure.

3. A method for producing a composite ceramic structure comprising the steps of:
preparing a clayware body or a molding body for firing pottery; preparing a body for firing containing a foaming agent and an evanescent granule or an evanescent porous body;
splicing the clayware body or the molding body for firing pottery and the body for firing; and
firing the clayware body or the molding body for firing pottery together with the spliced body for firing.

4. A method for producing a composite ceramic structure comprising the steps of:
preparing precursor slurry of pottery and porous concrete; splicing the pottery and the precursor slurry; and
curing the spliced precursor slurry.

5. A composite flowerpot comprising:
a porous body selected from a massive porous ceramic body, a massive porous concrete structure or a massive porous resin; and
a container composed of pot-shaped pottery where the porous body is filled.

6. A composite flowerpot comprising:
a porous body selected from a massive porous ceramic body, a massive porous concrete structure or a massive porous resin; and
a coating film coated on the surface of the porous body.

7. A composite plate-like tile comprising a composite ceramic structure according to claim 1, wherein said pottery and said porous ceramic body are plate-shaped and the porous ceramic body is placed on the face side and is overlapped with the pottery.

8. A composite plate-like tile further comprising a composite ceramic structure according to claim 2, wherein said pottery and said porous concrete structure are plate-shaped and the porous concrete structure is placed on the face side and is overlapped with the pottery.

9. The composite plate-like tile according to claim 7 or claim 8, wherein a groove for housing extending to said pottery in a longitudinal direction is formed on a side equivalent to the tile face and the groove for housing is filled with said porous ceramic body or said porous concrete structure.

10. The composite plate-like tile according to any one of claims 7 to 9, wherein a catching part attachable and removable to and from the worked surface is provided.

11. The composite plate-like tile according to any one of claims 7 to 10, wherein a side equivalent to the tile face is a descending and slanting slope toward the tile face.

12. The composite plate-like tile according to any one of claims 7 to 11, wherein a ridge extending in a longitudinal direction is formed on a side equivalent to the back of the tile on the upper side.

13. A method for producing a composite flowerpot using the method for producing a composite ceramic structure according to claim 3, wherein said clayware body or said molding body for firing pottery is pot-shaped and said splicing step is to insert a body for firing into a clayware body or a molding body for firing pottery.

14. A method for producing a composite flowerpot comprising the steps of:
preparing a pot made of pottery and precursor slurry of porous concrete;
filling the precursor slurry into the pot; and
curing the filled precursor slurry.

15. A method for producing a composite plate-like tile using the method for producing the composite ceramic structure according to claim 3, wherein said clayware body or said molding body for firing pottery and said body for firing are plate-shaped, and
said splicing step is to overlap said body for firing with said clayware body or said molding body for firing pottery.

16. A method for producing a composite ceramic structure, comprising the steps of:
inserting a body for firing containing a foam agent and an evanescent granule or an evanescent porous body into a hollow of a tubular clayware body or a molding body for firing pottery;
forming a columnar body by firing the clayware body or the molding body for firing pottery; and
cutting or fracturing the columnar body at a cut surface or a fracture cross section parallel with the longitudinal direction.

17. A composite plate-like tile obtained by the method for producing a composite ceramic structure according to claim 16, including a catching part attachable and removable to and from the worked surface.

18. A roof insulation structure comprising:
a plurality of composite flowerpots arranged on the roof of a building according to claim 5 or claim 6; and
a plant planted on the upper surface of the porous body.

19. The roof insulation structure according to claim 18,
wherein said plant is sedum or moss.

20. A wall surface structure comprising:
a plurality of composite plate-like tiles arranged on the wall surface of a building in the row state according to any one of claims 7 to 12; and
a plant cultivated on the face of the composite plate-like tiles.

21. The wall surface structure according to claim 20,
wherein said plant is sedum, moss or an ivy kind.

22. The wall surface structure according to claim 20 or 21,
wherein a water-supply means for supplying water to said plurality of composite plate-like tiles arranged in the row state is provided on a further upper level to the highest level of the plurality of composite plate-like tiles.

23. The wall surface structure with a water-supply means according to claim 22, wherein said water-supply means comprises:
a water-supply pipe located upwardly and horizontally of the highest level of said composite plate-like tiles;
a holding tile located upwardly of the highest level of said composite plate-like tiles having a locking part attachable and
removable to and from the worked surface and placing the water-supply pipe on the face side; and
a covering tile located upwardly of the holding tile having a cover for covering said water-supply pipe and an engaging part attachable and removable to and from the worked surface.

24. The wall surface structure with a water-supply means according to claim 23, wherein a catching part of said composite plate-like tile, a locking part of said holding tile, and an engaging part of said covering tile are virtually in the same shape.

25. A base for planting composed of the composite ceramic structure according to claim 1, wherein said pottery and said porous ceramic body are plate-shaped, and the porous ceramic body is arranged on the face and is overlapped with the pottery.

26. A base for planting composed of the composite ceramic structure according to claim 2, wherein said pottery and said porous concrete structure are plate-shaped, and the porous concrete structure is arranged on the face side and is overlapped with said pottery.

27. A plant ceramic compound made by putting a plant on the face of the base for planting according to claim 25 or 26.

28. The plant ceramic compound according to claim 27,
wherein said plant is sedum or moss.

29. A wall surface structure comprising:
a base wall surface;
a plurality of objects arranged outside the base wall surface in a surface direction of the base wall surface to be attachable and removable to and from the base wall surface; and
a holding part fixed to the base wall surface and arranged in a surface direction of the base wall surface for holding the plurality of objects to be engaged,
wherein said plurality of objects to be engaged comprise a plurality of plate-like tiles respectively having a catching part for catching the holding part on the back for arranging on the base wall surface in the row state and a pot-shaped tile having a catching part on the holding part, and
said pot-shaped tile is engaged with a portion of said holding part where said plate-like tiles are not engaged.

30. The wall surface structure according to claim 2,
wherein said plate-like tiles are composite plate-like tiles according to any one of claims 7 to 12.

31. The wall surface structure according to claim 30,
wherein a plant grows on the upper surface of said ceramic porous body.

32. The wall surface structure according to claim 31,
wherein said plant is sedum or moss.

33. The wall surface structure according to claim 29,
wherein a side equivalent to the tile face of the upper side of said plate-like tile is a descending and slanting slope toward the tile face.

34. The wall surface structure according to claim 29,
wherein a ridge extending in a longitudinal direction of said plate-like tile is formed on a side equivalent to the back of the tile located on the upper side of the plate-like tile.

35. The wall surface structure according to claim 29,
wherein a transverse groove extending in a longitudinal direction of said plate-like tile is formed on the lower side of the plate-like tile.

36. The wall surface structure according to any one of claims 29 to 35, wherein a water-supply means for feeding water to the plate-like tiles is provided on further upper level to the highest level of said plurality of plate-like tiles.

37. The wall surface structure with a water-supply means according to claim 36, wherein said water-supply means comprises:
a water-supply pipe located upwardly of the highest level of said plate-like tiles with stretched horizontally;
a holding tile located upwardly of the highest level of said plate-like tiles having a locking part attachable and removable to and from the worked surface and placing said water-supply pipe on the face side; and
a covering tile located upwardly of the holding tile and
covering the water-supply pipe having a cover to cover the water-supply pipe and an engaging part attachable and removable to and from the worked surface.

38. The wall surface structure with a water-supply means according to claim 37, wherein the catching part of said plate-like tile, the locking part of said holding tile, and the engaging part of said covering tile have virtually the same shape.

39. The wall surface structure according to any one of claims 29 to 40, wherein said plate-like tiles are arranged in a lattice shape to constitute tile surfaces, a missing part of each of said plate-like tiles is present on the tile surface, said pot-shaped tile is engaged with said holding part corresponding to the missing part, the integral multiple of the width and that of the horizontal width of said plate-like tiles are virtually equal, and a surface of the side on said base wall surface of the pot-shaped tile is fitted into the missing part.

40. The wall surface structure according to claim 39,
wherein the integral multiple of the height of said pot-shaped tile and that of the vertical width of said plate-like tiles are virtually equal.

41. A pot-shaped tile used for said wall surface structure according to any one of claims 29 to 40 comprising:
a face side wall opened upward and faced to outside space opposed to a base wall surface to be attached;
a back side wall faced to said base wall surface;
a pair of side walls;
a bottom wall enclosed with these side walls; and
a catching part to be engaged with said holding part arranged on said back side wall.

42. The pot-shaped tile according to claim 41, wherein the integral multiple of the width and that of the horizontal width of said plate-like tile are virtually equal.

43. The pot-shaped tile according to claim 41 or claim 42, wherein the integral multiple of the height and that of the vertical width of said plate-like tile are virtually equal.

44. The pot-shaped tile according to any one of claims 41 to 43, wherein a ridge projecting upward and extending in a transverse direction is formed on the upper surface of said back side wall.

45. The pot-shaped tile according to any one of claims 41 to 44, wherein a slope descending and slanting from the upper surface of said back side wall toward the front is formed.

46. The pot-shaped tile according to any one of claims 41 to 45, wherein a transverse groove extending in a crosswise direction is formed on the outer surface of said bottom wall.
